# EUROPEAN PATENT APPLICATION

(11) **EP 1 857 325 A1**
(43) Date of publication of application: **21.11.2007**
(21) Application number: 05720503.1
(22) Date of filing: 10.03.2005
(51) Int. Cl.: B60R 16/02, B60C 23/00, B60G 17/00, B60G 17/015, G01P 15/12, G08C 17/02

(54) **ROAD SURFACE CONDITION DETECTION SYSTEM, ACTIVE SUSPENSION SYSTEM, ANTI-LOCK BRAKE SYSTEM, AND SENSOR UNIT FOR THE ROAD SURFACE CONDITION DETECTION SYSTEM**

(71) Applicant: THE YOKOHAMA RUBBER CO., LTD., Tokyo 105-8685 (JP)
(72) Inventor: HATTORI, Yutaka c/o THE YOKOHAMA RUBBER CO., LTD., Kanagawa 2540047 (JP); HATANO, Yasuo c/o THE YOKOHAMA RUBBER CO., LTD., Kanagawa 2540047 (JP)
(74) Representative: Wiedemann, Peter
(86) International application number: PCT/JP2005/004232
(87) International publication number: WO 2006/095429

(57) **Abstract**

A road surface condition detection system capable of quickly and accurately detecting road surface conditions during vehicle running, an active suspension system and an anti-lock brake system using the road surface condition detection system, and a sensor unit for the road surface condition detection system are provided. A sensor unit, provided on a rotor of a rotation mechanism section of a wheel, has an acceleration sensor for detecting an acceleration occurring in the rotational direction of the wheel as the wheel rotates. A signal of the detected acceleration is received by a monitor device, the received signal is compared to a variation pattern of an acceleration signal for each road surface condition, the pattern being previously stored in a storage section to identify a road surface condition, and information of the identified condition is output. Drive control of the active suspension system and the anti-lock brake system is made based on the information of the road surface conditions.

## Description

### Technical field

The present invention relates to a road surface condition detection system that detects acceleration of a wheel in the rotational direction during vehicle running to detect road surface conditions and an active suspension system and an anti-lock brake system therewith, and a sensor unit therefor.

### Background art

There has been conventionally known active suspension systems capable of maintaining a vehicle body in a stable state, even if any fluctuation occurs in a road surface condition, a load applied to a vehicle or the like, by installing an actuator configured so as to adjust the magnitude of a vehicle body supporting force against each of wheels of the vehicle on a suspension of the wheel to positively adjust characteristics of the suspension.

As an example of such active suspension systems, for example, there have been known systems as disclosed in Japanese Patent Publication No. 05-185820 (hereinafter referred to as Patent Document 1), Japanese Patent Publication No. 08-197931 (hereinafter referred to as Patent Document 2) and Japanese Patent Publication No. 2000-264034 (hereinafter referred to as Patent Document 3).

According to Patent Document 1, there has been disclosed an active suspension system for vehicle that includes actuators capable of adjusting an increase or decrease in a vehicle body supporting force against respective wheels of a vehicle, each of which is provided between the wheel and the vehicle body; a distribution setter for setting a control distribution state between a left-wheel one and a right-wheel one of the actuators so as to restrain roll of the vehicle; a controller for controlling operation of the actuator in accordance with the control distribution state set by the distribution setter; a road state determination device for determining whether or not a vehicle running road surface is in an easy-to-slide state, wherein the distribution setter is configured so as to set a control distribution state capable of reducing roll restraint of the vehicle when the road state is determined to be easy-to-slide.

According to Patent Document 2, there has been disclosed an active suspension device configured so as to dispose an electromagnetic actuator constituted of a screw device having an external thread member and an internal thread member engaging with each other and a motor for driving extension of the thread members between a wheel and a vehicle body, wherein at least one of the motor or the thread device is elastically supported against at least one of the wheel or the vehicle body through a spring device.

According to Patent Document 3, there has been disclosed a controller for active suspension constituted of: a hydraulic cylinder placed between a wheel and a vehicle body and installed on a suspension spring side by side; a hydraulic pump and a tank connected to the hydraulic cylinder; a control valve for controlling a flow rate or pressure of the hydraulic cylinder in accordance with a command value; a detector for detecting front/rear and right/left accelerations and speeds of a vehicle, a controller for computing values detected by the detector and outputting control signals; and a driver for driving the hydraulic pump and the control valve based on the control signals of the controller, wherein the hydraulic cylinder telescopically extended and retracted through the hydraulic pump by an output of the driver is formed into a double-acting type partitioned into upper and lower chambers, the hydraulic pump is formed into a reversible rotating type of which discharge direction, start and stop are controlled by an output of the driver, the control valve is constituted of a pair of electromagnetic proportional pressure control valves provided in a reflux passage from the upper and lower chambers of the hydraulic cylinder to a tank, the driver, the hydraulic pump, the hydraulic cylinder and the electromagnetic proportional pressure control valves are disposed independently for each wheel, the electromagnetic proportional pressure control valve controls pressures in the upper and lower chambers of the hydraulic cylinder to produce a control force for restraining extension and retraction of the hydraulic cylinder and to selectively supply discharged oil from the hydraulic pump controlled by an output of the driver to one of upper or lower chamber of the hydraulic cylinder through a check valve for vehicle posture control.

Japanese Patent Publication No. 10-203221 (hereinafter referred to as Patent Document 4) has disclosed an example of an active suspension system capable of improving ride comfort by stabilizing seats in a vehicle body during vehicle running.

Precautions for vehicle safety drive includes setting a vehicular tire air pressure to a proper condition and attention to a tire worn condition. For example, when a tire internal air pressure lowers, the incidence rate of tire blowout increases and, during high-speed running, a burst is apt to occur, which may cause a severe accident. Accordingly, a driver should routinely inspect tires.

However, when a frictional force lowers between a road surface and a tire, for example, when a road surface is wet under a rainy weather even if a tire state is kept in a good one by inspecting tires, slip occurs upon brake application. This moves a vehicle in an unexpected direction, thus having caused accidents.

In order to prevent accidents caused by such a slip or a sudden start, an anti-lock brake system, hereinafter referred to as ABS, a traction control system and further a stability control system with an YAW sensor have been developed.

For example, the ABS is a system that detects rotating states of each of tires and controls a braking force so as to prevent the tire from being placed into a lock state based on the detected result.

As the rotating states of the tire, states of the tire, such as the rotational speed, internal air pressure and strain are detected and the detected result can be used for control.

As examples of such control systems, for example, there have been known a brake device for automobile disclosed in Japanese Patent Publication No. 05-338528 (hereinafter referred to as Patent Document 5), a brake control device disclosed in Japanese Patent Publication No. 2001-018775 (hereinafter referred to as Patent 6), a method and device for controlling vehicle disclosed in Japanese Patent Publication No. 2001-182578 (hereinafter referred to as Patent Document 7), a vehicle movement control device disclosed in Japanese Patent Publication No. 2002-137721 (hereinafter referred to as Patent Document 8) and a brake device disclosed in Japanese Patent Publication No. 2002-160616 (hereinafter referred to as Patent Document 9).

Patent Document 5 has disclosed a brake device for automobile capable of preventing a change in an operation feeling by brake operations during and upon hard braking in the following way: A negative pressure is supplied from a vacuum tank to a vacuum booster connected with a brake pedal, a negative pressure is supplied from a vacuum pump to the vacuum tank so that the vacuum pump is driven by a pump motor. When an acceleration sensor 14 detects deceleration/acceleration of an automobile reaches a predetermined value, a pump motor for operating a vacuum pump is controlled.

Patent Document 6 has disclosed a brake control device equipped with an ABS control unit, capable of switching control of the ABS control unit between normal-turn determination and abnormal-turn determination during ABS control by including, in the ABS control unit, a lateral acceleration estimation device for estimating a lateral acceleration generated at a vehicle and a comparison and determination device for making an comparison between an estimated lateral acceleration, an estimated lateral acceleration by a vehicle behavior detector and a detected lateral acceleration detected by a lateral acceleration sensor included in the vehicle behavior detector and for determining it to be under a normal turn corresponding to a steer angle if a difference between these lateral accelerations is below a predetermined value and determining it to be under an abnormal turn if the difference is above the predetermined value.

Patent Document 7 has disclosed a method and device for controlling vehicle formed out of a setting point corresponding to a control signal for regulating a vehicle deceleration and/or acceleration, wherein a correction coefficient indicating a vehicle acceleration or deceleration generated by a running road surface slope is formed and the correction coefficient is superimposed with the setting point, thus improving vehicle deceleration and/or acceleration setting.

Patent Document 8 has disclosed a vehicle movement control device which gains a side slip angle change speed β' of a center-of-gravity point as an actual yawing momentum of a vehicle having a plurality of wheels, and makes a brake fluid pressure ΔP act on any of brakes of left and right rear wheels if an absolute value of the change speed β' is above a predetermined value β_{o'} to produce a yawing moment in a state that the more the absolute value of the change speed β' is, the more a value is, in such a direction as to reduce the absolute value of the change speed β' and, even during the control of the yawing moment, continues to determine whether the slip control is necessary or not on the wheel applied the brake fluid pressure ΔP and, when the slip control is necessary, the slip control keeping a slip ratio within a proper range is executed by controlling the brake fluid pressure ΔP.

Patent Document 9 has disclosed a brake device which comprises at least two of an accelerator sensor for detecting an acceleration in a vehicle front/rear direction, a wheel speed sensor for detecting a wheel speed of each of wheels and a brake pressure sensor for detecting a brake pressure, computes a target brake pressure by feedback from at least the two sensors, makes an indicated electric current calculating portion compute an indicated electric current based on the computed result, flows the indicated current through a brake drive actuator and which produces a braking force corresponding to the magnitude of the indicated current, thus suppressing output failure even if external disturbance occurs or one sensor is broken.

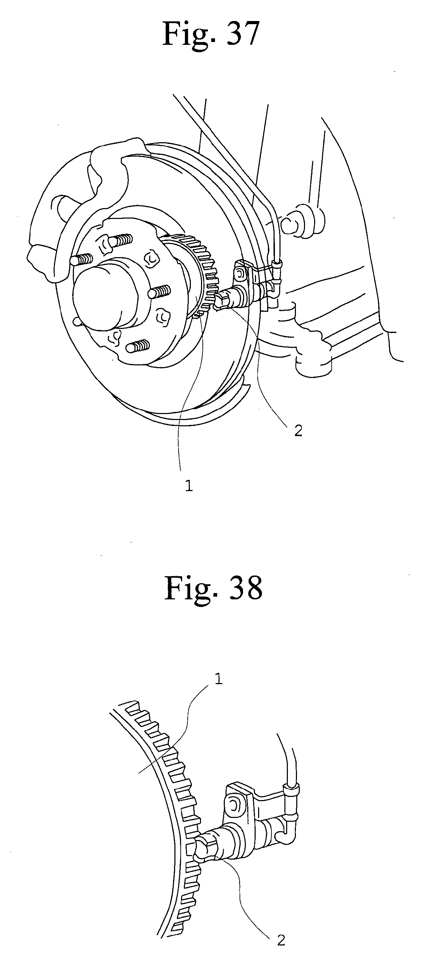

As a method for detecting a rotational speed of a tire, there is generally known a method for detecting a rotational speed of a tire using a rotor 1 and a pickup sensor 2 rotating integrally with a wheel carrier as shown in Figures 37 and 38. In this method, a plurality of irregularities formed at uniform intervals on a peripheral surface of the rotor 1 cross magnetic fields generated by the pickup sensor 2, so that magnetic flux density changes and pulse-shaped voltages are generated at a coil of the pickup sensor 2. The pulse detection permits detection of a rotational speed. An example of a fundamental principle of this method is introduced in Japanese Patent Publication No. 52-109981.
Patent Document 1: Japanese Patent Publication No. 05-185820
Patent Document 2: Japanese Patent Publication No. 08-197931
Patent Document 3: Japanese Patent Publication No. 2000-264034
Patent Document 4: Japanese Patent Publication No. 10-203221
Patent Document 5: Japanese Patent Publication No. 05-338528
Patent Document 6: Japanese Patent Publication No. 2001-018775
Patent Document 7: Japanese Patent Publication No. 2001-182578
Patent Document 8: Japanese Patent Publication No. 2002-137721
Patent Document 9: Japanese Patent Publication No. 2002-160616
Patent Document 10: Japanese Patent Publication No. 52-109981

### Disclosure of the invention

### Problems to be solved by the invention

One of reasons why such active suspension system and anti-lock brake system are required is changes in road surface conditions during vehicle running. The changes in road surface conditions due to a weather or environment cause vehicle body vibrations and degraded stability and hence variations in brake effectiveness and wheel slip during brake operation. Accordingly, technology development for promptly and appropriately detecting road surface conditions has been underway.

In view of the aforementioned problems, it is an object of the present invention to provide a road surface condition detection system capable of promptly and appropriately detecting road surface conditions during vehicle running and an active suspension system and an anti-lock brake system therewith, and a sensor unit therefor.

### Means for solving the problems

To attain the aforementioned object, there is proposed a road surface condition detection system comprising: a sensor unit which is provided at a rotation mechanism section installed on a vehicle body of a vehicle and including a rotor for rotating the wheels fixed thereon and the wheels and which detects an acceleration generated in a rotational direction with rotation, converts the acceleration into an electric signal, converts the detected acceleration signal into a digital data and transmits digital information including the digital data; a monitor device which is installed on the vehicle body and receives the digital information transmitted from the sensor unit and acquires the acceleration signal, wherein the monitor device includes; road surface condition storage means of a plurality of types of information of variation characteristics of the acceleration signal detected for each condition of road surfaces on which the vehicle runs; road surface condition identification means of identifying a road surface condition corresponding to the received acceleration signal based on information of variation characteristics of an acceleration signal received from the sensor unit and an acceleration signal stored in the road surface condition storage means; and road surface condition information output means of extracting, from the road surface condition storage means, information of a road surface condition identified by the road surface condition identification means and of outputting the information.

According to the present invention, the sensor unit detects an acceleration of a wheel in a rotational direction during vehicle running and the monitor device receives an electric signal of the acceleration as digital information. The monitor device identifies road surface condition corresponding to the received acceleration signal, based on information of the received acceleration signal and variation characteristics of the acceleration signal stored in a road surface condition storage device, and outputs information of the identified road surface condition.

In the present invention, the road surface condition stores variation characteristics patterns of acceleration signals as information of variation characteristics of the acceleration signals, while the monitor device identifies a road surface condition by comparing the variation characteristics pattern of the acceleration signal with the received acceleration signal.

Otherwise, in the present invention, the road surface condition storage device stores information obtained by applying predetermined processing to variation characteristics of an acceleration signals as information of variation characteristics of the acceleration signals in a wheel rotational direction, while the monitor device identifies a road surface condition based on information obtained by applying the predetermined processing and the received acceleration signal.

Moreover, in the present invention, the sensor unit mounted on the rotor detects an acceleration of a rotating wheel.

In the present invention, the sensor unit comprises receiving means of receiving an electromagnetic wave of a first frequency, conversion means of converting energy of the received electromagnetic wave of the first frequency into driving electric energy and transmission means of operating on the electric energy and transmitting the digital information with an electromagnetic wave of a second frequency, wherein the monitor device includes radiation means of radiating the electromagnetic wave of the first frequency, receiving means of receiving the electromagnetic wave of the second frequency and extraction means of extracting the digital information from the electromagnetic wave of the second frequency.

With such a configuration, the sensor unit operates on energy of an electromagnetic wave of the first frequency received from the monitor device and transmits digital data of an acceleration signal to the monitor device with an electromagnetic wave of the second frequency, thus permitting wireless communications between the sensor unit and the monitor device. Furthermore, no provision of a power supply such as a battery is required in the sensor unit.

The present invention is configured so as to perform transmit/receive operations in time sharing by setting the first frequency and the second frequency to the same frequency.

Moreover, the present invention comprises transmission means of transmitting identification information unique to an individual included in digital information to the monitor device, wherein the monitor device is configured so as to identify a rotation mechanism section mounted with the sensor unit through identification information received from the sensor unit.

The present invention comprises a semiconductor acceleration sensor having a silicon piezo diaphragm to detect an acceleration of a wheel in the rotational direction, wherein the semiconductor acceleration sensor is provided in the sensor unit.

Furthermore, the present invention is configured so as to perform suspension control, rapidly meeting a road surface condition during vehicle running, by applying a road surface condition detection system in such a configuration to an active suspension system.

Furthermore, the present invention is configured so as to perform brake control, promptly meeting a road surface condition during vehicle running, by applying a road surface condition detection system in such a configuration to an anti-lock brake system.

To attain the aforementioned object, there is proposed a sensor unit which is provided at a rotation mechanism section installed on a vehicle body and including a rotor for rotating the wheels fixed thereon and the wheels and which detects an acceleration generated in a rotational direction with rotation, wherein the sensor unit comprises detection/conversion means of detecting an acceleration generated in the rotational direction with rotation and converting the detected acceleration into an electric signal, conversion means of converting the acceleration signal into digital data and transmission means of transmitting digital information including the digital data.

With the sensor unit in such a configuration, an acceleration generated in the rotational direction with wheel rotation is detected and converted into an electric signal, and the acceleration signal is converted into digital data and digital information including the digital data is transmitted.

A position of the sensor unit moves with rotational speed of the rotation mechanism section so that a combined value of an acceleration acting on the sensor unit in a vehicle running direction and an acceleration in a rotational direction of the wheel changes. Accordingly, in the sensor unit, an electric signal of an acceleration of the wheel in the rotational direction varies in a sine wave form with rotation. Moreover, the cycle of the variation becomes shorter with increasing rotational speed and the magnitude and cycle of the variation vary with road surface conditions. This enables to detect a rotational speed of a wheel per unit time and road surface conditions from the acceleration signal.

### Advantages of the invention

According to the road surface condition detection system of the present invention, the variance cycle of electric signals of detected accelerations in wheel-rotation direction during vehicle running becomes shorter as rotational speed is higher, and the magnitude and cycle of variance vary with road surface conditions, which enables rapid detection of road surface conditions from the acceleration signal.

Accordingly, an active suspension system applied with the road surface condition detection system according to the present invention is configured so as to perform suspension control, rapidly meeting a road surface condition during vehicle running.

Moreover, an anti-lock brake system applied with the road surface condition detection system according to the present invention is configured so as to perform brake control, rapidly meeting a road surface condition during vehicle running.

Furthermore, according to a sensor unit of the present invention, only attaching the sensor unit at predetermined positions of rotating elements such as rims, wheels, tire wheels and axles enables easy detection of accelerations in the rotational direction generated by wheel rotation.

### Brief description of the drawings

Figure 1 is a block diagram showing an electric circuit of a road surface condition detection system according to a first embodiment of the present invention;
Figure 2 is a view describing mounting states of a sensor unit and a monitor device according to the first embodiment of the present invention;
Figure 3 is a view describing a mounting state of the sensor unit according to the first embodiment of the present invention;
Figure 4 is a view describing mounting states of components except the sensor unit according to the first embodiment of the present invention;
Figure 5 is a configurational view showing an electric circuit of the sensor unit according to the first embodiment of the present invention;
Figure 6 is an external perspective view showing a semiconductor acceleration sensor according to the first embodiment of the present invention;
Figure 7 is a cross-sectional view taken on line B-B of Figure 6;
Figure 8 is a cross-sectional view taken on line C-C of Figure 6;
Figure 9 is an exploded perspective view showing a semiconductor acceleration sensor according to the first embodiment of the present invention;
Figure 10 is a configurational view showing an electric circuit of the semiconductor acceleration sensor according to the first embodiment of the present invention;
Figure 11 is a view showing a bridge circuit for detecting acceleration in X-axis direction using the semiconductor acceleration sensor according to the first embodiment of the present invention;
Figure 12 is a view showing a bridge circuit for detecting acceleration in Y-axis direction using the semiconductor acceleration sensor according to the first embodiment of the present invention;
Figure 13 is a view showing a bridge circuit for detecting acceleration in Z-axis direction using the semiconductor acceleration sensor according to the first embodiment of the present invention;
Figure 14 is a view describing operation of the semiconductor acceleration sensor according to the first embodiment of the present invention;
Figure 15 is a view describing operation of the semiconductor acceleration sensor according to the first embodiment of the present invention;
Figure 16 is a view describing accelerations in X-axis, Y-axis and Z-axis directions detected by the acceleration sensor of the sensor unit according to the first embodiment of the present invention;
Figure 17 is a view showing an actually measured result of accelerations in Z-axis direction according to the first embodiment of the present invention;
Figure 18 is a view showing an actually measured result of accelerations in Z-axis direction according to the first embodiment of the present invention;
Figure 19 is a view showing an actually measured result of accelerations in Z-axis direction according to the first embodiment of the present invention;
Figure 20 is a view showing an actually measured result of accelerations in X-axis direction according to the first embodiment of the present invention;
Figure 21 is a view showing an actually measured result of accelerations in X-axis direction according to the first embodiment of the present invention;
Figure 22 is a view showing an actually measured result of accelerations in X-axis direction according to the first embodiment of the present invention;
Figure 23 is a view showing an actually measured result of accelerations in Y-axis direction according to the first embodiment of the present invention;
Figure 24 is a view showing an actually measured result of accelerations in Y-axis direction according to the first embodiment of the present invention;
Figure 25 is a view showing an actually measured result of accelerations in X-axis direction when a brake is applied according to the first embodiment of the present invention;
Figure 26 is a view showing an actually measured result of accelerations in Z-axis direction when a brake is applied according to the first embodiment of the present invention;
Figure 27 is a view showing an actually measured result of accelerations in wheel rotational direction on a dry paved road under a clear weather according to the first embodiment of the present invention;
Figure 28 is a view showing an actually measured result of accelerations in wheel rotational direction on a paved road with a road surface covered with 2 to 3 mm deep water film under a rainy weather according to the first embodiment of the present invention;
Figure 29 is a view showing an actually measured result of accelerations in wheel rotational direction on a paved road with the whole surface is frozen according to the first embodiment of the present invention;
Figure 30 is a schematic configurational view showing an active suspension system according to a second embodiment of the present invention;
Figure 31 is a configurational view showing a suspension body according to the second embodiment of the present invention;
Figure 32 is a schematic configurational view showing an active suspension system according to a third embodiment of the present invention;
Figure 33 is a schematic configurational view showing an anti-lock brake system according to a fourth embodiment of the present invention;
Figure 34 is a configurational view showing an electric circuit of a monitor device according to the fourth embodiment of the present invention;
Figure 35 is a configurational view showing a vehicular brake control unit according to a fifth embodiment of the present invention;
Figure 36 is a configurational view showing an electric circuit of a monitor device according to the fifth embodiment of the present invention;
Figure 37 is a view describing a wheel rotational-speed detection unit in a conventional example; and
Figure 38 is a view describing a wheel rotational-speed detection unit in a conventional example.

### Description of symbols

- 100, 100A: sensor unit
- 110: antenna
- 120: antenna switch
- 130: rectification circuit
- 131, 132: diode
- 133: capacitor
- 134: resistor
- 140: central processing section
- 141: CPU
- 142: D/A conversion circuit
- 143: storage section
- 150: detection portion
- 151: diode
- 152: A/D conversion circuit
- 160: transmission portion
- 161: oscillation circuit
- 162: modulation circuit
- 163: high-frequency amplification circuit
- 170, 170B: sensor portion
- 171: acceleration sensor
- 172: A/D conversion circuit
- 173: pressure sensor
- 174: A/D conversion circuit
- 200, 200A, 200B: monitor device
- 210: radiation unit
- 211: antenna
- 212: transmission portion
- 220: wave receiving unit
- 221: antenna
- 222: detection portion
- 230: control portion
- 240: computation portion
- 250: storage section
- 260: operation portion
- 300: tire
- 301: cap tread
- 302: under tread
- 303A, 303B: belt
- 304: carcass
- 305: tire body
- 306: rim
- 410: suspension drive source
- 420: suspension body
- 421: upper mount portion
- 422: spring upper seat
- 423: coil spring
- 424: rubber member
- 425: damper
- 426: damper connection member
- 431: outer cylinder
- 432: piston rod
- 433: guide
- 434: bracket
- 440: hub carrier
- 510, 520: rotational speed sensor
- 600, 600A: braking control unit
- 610: brake pedal
- 620: master cylinder
- 630: pressure control valve
- 640: brake drive actuator
- 3: tire house
- 10: semiconductor acceleration sensor
- 11: seating
- 12: silicon substrate
- 13: diaphragm
- 13a-13d: diaphragm piece
- 14: thick-film portion
- 15: weight
- 19A, 19B: support
- 191: outer frame portion
- 192: column
- 193: beam
- 194: projection portion
- 194a: projection portion tip
- 31A-31C: voltage detector
- 32A-32C: DC power supply
- Rx1-Rx4, Ry1-Ry4, Rz1-Rz4: piezo resistor (diffusion resistor)

### Best mode for carrying out the invention

With reference to the accompanying drawings, description will be given below of preferred embodiments of the present invention.

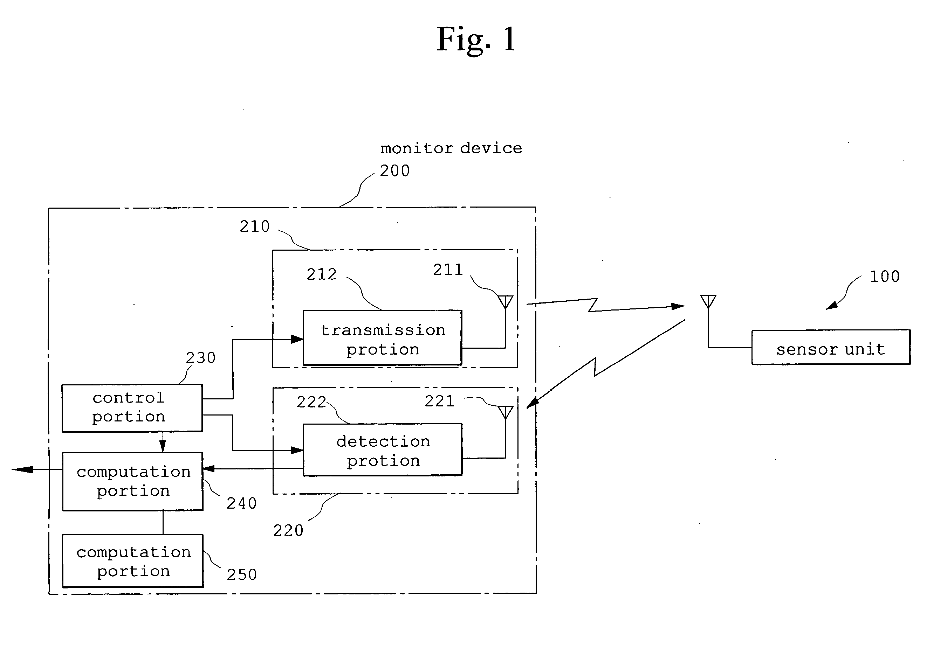

Figure 1 is a block diagram showing an electric circuit of a road surface condition detection system according to a first embodiment of the present invention. A road surface condition detection system in a present embodiment is composed of a sensor unit 100 and a monitor device 200.

An electric circuit of the monitor device 200 is composed of a radiation unit 210, a wave receiving unit 220, a control portion 230, a computation portion 240 and a storage section 250, as shown in Figure 1. The control portion 230 and the computation portion 240 have a known CPU and a memory circuit including a ROM storing a program for operating the CPU and a RAM required to perform arithmetic processing, respectively.

The radiation unit 210 is composed of an antenna 211 and a transmission portion 212 for radiating an electromagnetic wave of a predetermined frequency (a first frequency) in 2.45 GHz band and radiates an electromagnetic wave of the first frequency from the antenna 211 based on an instruction from the control portion 230.

The transmission portion 212 is constituted of, as an example, an oscillation circuit 161, a modulation circuit 162 and a high-frequency amplification circuit 163 in the same way as for a transmission portion 160 of the sensor unit 100. This permits an electromagnetic wave in 2.45 GHz band to be radiated from the antenna 211. High-frequency power output from the transmission portion 212 is set to a value high enough to supply electric energy from the electromagnetic wave radiating antenna 211 of the monitor device 200 to the sensor unit 100. This permits an acceleration 320 of each tire 300 to be detected for each monitor device 200.

The wave receiving unit 220, including an antenna 221 for receiving an electromagnetic wave of a predetermined frequency (a second frequency) in 2.45 GHz band and a detection portion 222, detects the electromagnetic wave of the second frequency received by the antenna 221 based on the instruction from the control portion 230, converts the detected signal into a digital signal and output the digital signal to the computation portion 250. The detection portion 222 is constituted of, as an example, a similar circuit to a detection portion 150 of the sensor unit 100 described later.

The control portion 230, when its operation starts, drives the transmission portion 212, radiates an electromagnetic wave for a predetermined period t3 and then drives the detection portion 222 for a predetermined period t4 and outputs a digital signal from the detection portion 222 to the computation portion 240.

The computation portion 240 detects accelerations in the orthogonal direction to each other including those in a wheel-rotation direction transmitted from the sensor unit 100 based on the digital signal, identifies a road surface condition based on accelerations in the wheel-rotation direction and road surface condition information stored in the storage section 250 and outputs information of the identified road surface conditions and three detected values of accelerations. Then the control portion 230 repeats the same processing as the above.

The storage section 250 stores a plurality of types of information of variance characteristics of acceleration signals in a wheel-rotation direction detected by the sensor unit 100 described later for each condition of road surfaces on which a vehicle runs in accordance with information of the road surface conditions. These information are determined by previously performing vehicle test runs. In the present embodiment, the storage section 250 stores variance characteristics patterns of acceleration signals generated in a wheel-rotation direction as the information of variance characteristics of acceleration signals. As the information of variance characteristics of acceleration signals generated in a wheel-rotation direction, the information obtained by predetermined processing for variance characteristics of an acceleration signal may be stored. For example, by previously mixing a reverse-phase component of an acceleration component for an acceleration signal, storing information of a noise component adapted to a road surface condition obtained by removing the acceleration component in the storage section 250, a road surface condition may be determined by information of noise components obtained by the same processing as the above for an acceleration signal obtained from the sensor unit 100 and information stored in the storage section 250. Otherwise, as information obtained by performing the above processing, information obtained by integrating the noise components of acceleration signals, for example, a voltage value obtained by integrating noise components may be used.

In the present embodiment, the radiation period t3 and the wave receiving period t4 in the monitor device 200 are set to 0.15 ms and 0.85 ms respectively. This permits monitor device 200 to obtain acceleration signals from the sensor unit 100 at intervals of 1 ms and to obtain an acceleration signal in a condition near to an analog signal. The present embodiment is configured so that a voltage of 3V or more can be stored as electric energy high enough to drive the sensor unit 100 by radiating an electromagnetic wave from the radiation unit 210 only for a period t3.

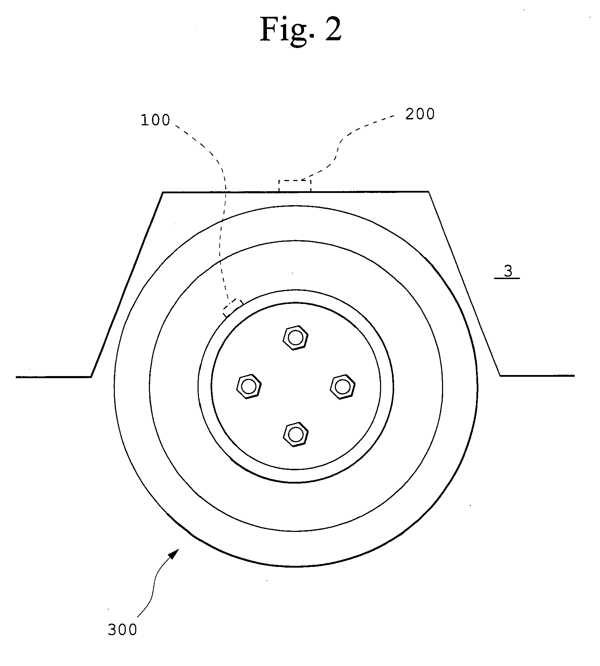

In the sensor unit 100 and the monitor device 200, as shown in Figure 2, the sensor unit 100 is fixed on the rotation mechanism section of a vehicular tire 300 and the monitor device 200 is fixed on a tire house 3 of the tire 300.

The rotation mechanism section 500 mounted with the sensor unit 100 includes a brake disc 520 rotating with an axle 510, a wheel carrier 530 for fixing a wheel of the tire 300 and rotating elements of the tire 300 such as a tire body and a rim.

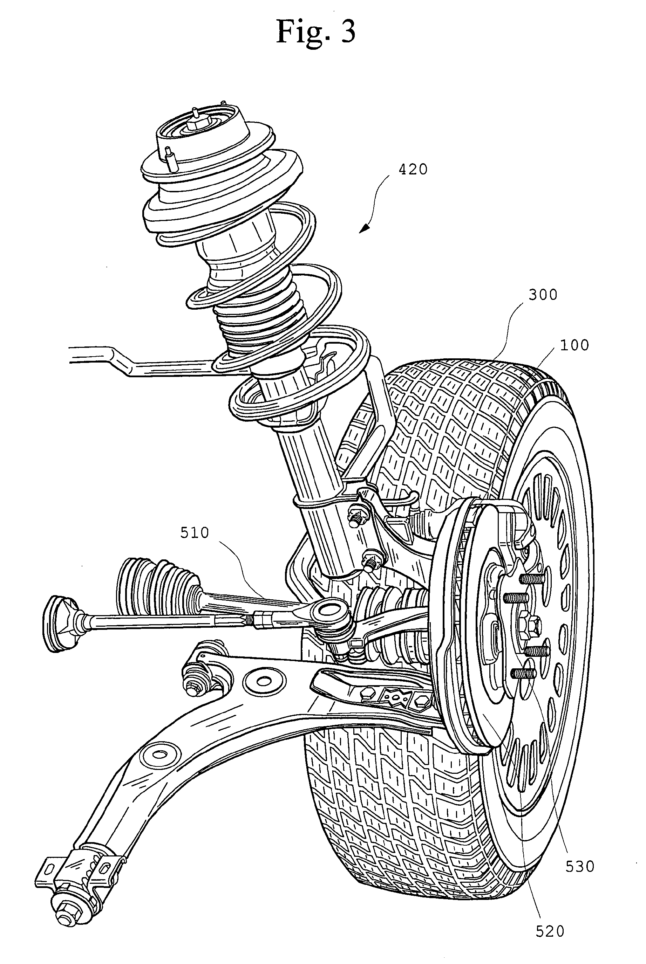

In the present embodiment, the sensor unit 100, fixed at a predetermined position of the brake disc 520 rotating with the tire 300, for example, as shown in Figures 2 and 3, detects accelerations in three directions orthogonal to each other generated by rotation of the tire 300 with an acceleration sensor positioned in the sensor unit 100 and described later, and converts the detected acceleration into an electric signal and then the acceleration signal into digital data. The sensor unit then generates digital information including the digital data of accelerations signals as detected results and transmits the information.

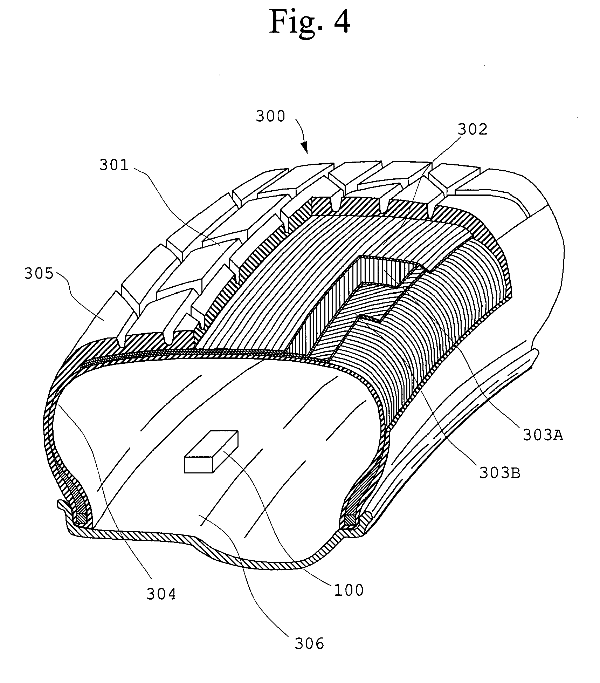

The present embodiment is configured so that the sensor unit 100 is fixed on the brake disc 520, but is not limited to this. For example, as shown in Figure 4, the sensor unit may be fixed on a rim 306. In Figure 4, the tire 300 is, for example, a known tubeless radial tire and, in the present embodiment, includes a wheel and a rim. In Figures 3 and 4, a reference character 300 is a tire, which is composed of the tire body 305, the rim 306 and the wheel (not shown). The tire body 305 comprises a known cap tread 301, an under tread 302, belts 303A, 303B and a carcass 304.

The number of the sensor units 100 mounted on each rotation mechanism section 500 is not limited to one, and more than one sensor unit may be mounted for auxiliary use or the like.

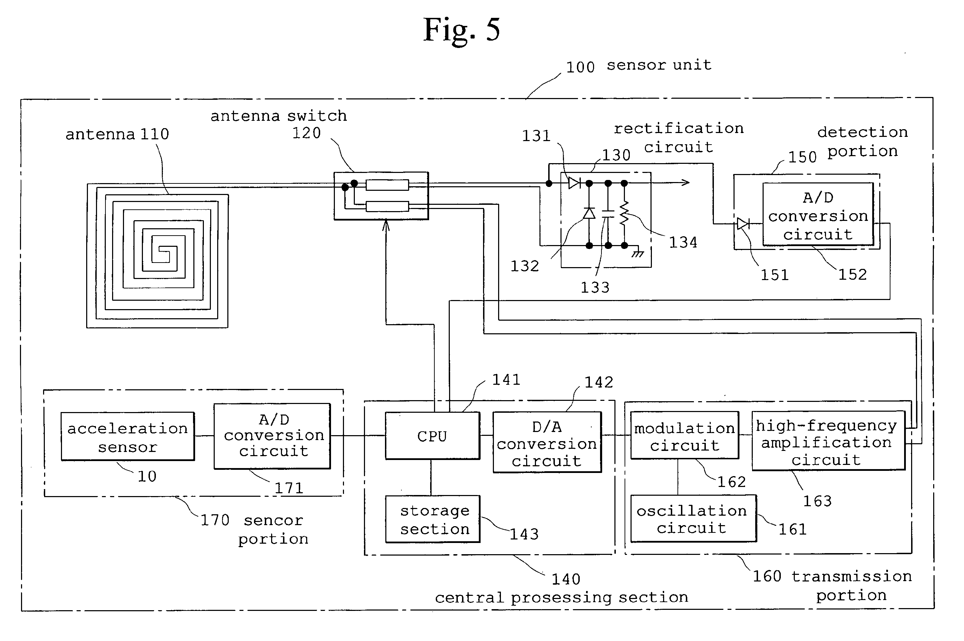

An electric circuit of the sensor unit 100 is, as an example, a circuit as shown in Figure 5. That is, the sensor unit 100 is, as an example, composed of an antenna 110, an antenna switch 120, a rectification circuit 130, a central processing section 140, a detection portion 150, a transmission portion 160 and a sensor portion 170.

The antenna 110 makes communications with the monitor device 200 through an electromagnetic wave and is matched with a predetermined frequency (a first frequency), for example, in 2.4 GHz band.

The antenna switch 120 is constituted of, for example, an electronic switch and performs switching between a connection of the antenna 110 with the rectification circuit 130 and the detection portion 150, and a connection of the antenna 110 with the transmission portion 160.

The rectification circuit 130 is constituted of diodes 131, 132, a capacitor 133 and a resistor 134 to form a known full-wave rectification circuit. The input side of the rectification circuit 130 is connected with the antenna 110 through the antenna switch 120. The rectification circuit 130 rectifies a high-frequency current induced to the antenna 110 to be converted into a DC current, which is output as a drive power supply of the central processing section 140, the detection portion 150, the transmission portion 160 and the sensor portion 170.

The central processing section 140 is composed of the known CPU 141, a digital/analog (hereinafter referred to as D/A) conversion circuit 142 and the storage section 143.

The CPU 141 operates on a program stored in a semiconductor memory of the storage section 143 and, when driven by electric energy supplied, produces digital information including digital data of acceleration signals obtained from the sensor portion 170 and identification information described later and transmits the digital information to the monitor device 200. The storage section 143 previously stores the identification information specific to the sensor unit 100.

The storage section 143 has a ROM recorded with a program for operating the CPU 141 and an electrically rewritable nonvolatile semiconductor memory such as EEPROM (electrically erasable programmable read-only memory) and previously stores the identification information specific to the individual sensor units 100 in a region designated so as not to be rewritable within the storage section 143 at the time of manufacture.

The detection portion 150 is composed of a diode 151 and an A/D converter 152, and the anode of the diode 151 is connected to the antenna 110 and the cathode is connected to the CPU 141 of the central processing section 140 through the A/D converter 152. This permits an electromagnetic wave received by the antenna 110 to be detected by the detection portion 150 and the detected and obtained signal to be converted into a digital signal and to be input into the CPU 141.

The transmission portion 160, composed of the oscillation circuit 161, the modulation circuit 162 and the high-frequency amplification circuit 163, modulates a carrier wave of a frequency in 2.45 GHz band mainly constituted of a known PLL circuit and oscillated by the oscillation circuit 161 using the modulation circuit 162 based on an information signal input from the central processing section 140 and supplies the modulated carrier wave to the antenna 110 as a high-frequency current of a frequency (a second frequency) in 2.45 GHz band through the high-frequency amplification circuit 163 and the antenna switch 120. In the present embodiment, the first frequency and the second frequency are set so as to be the same, but may be set so as to be different from each other.

The sensor portion 170 is constituted of an accelerator sensor 10 and an A/D conversion circuit 171.

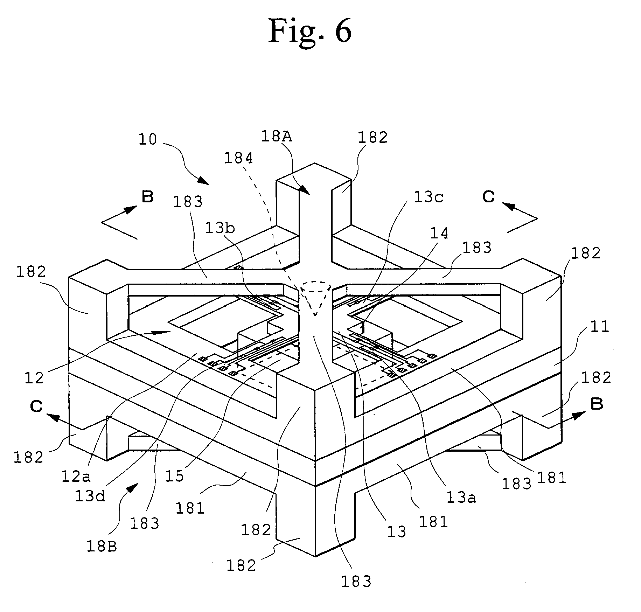

The acceleration sensor 10 is constituted of a semiconductor acceleration sensor as shown in Figures 6 to 9.

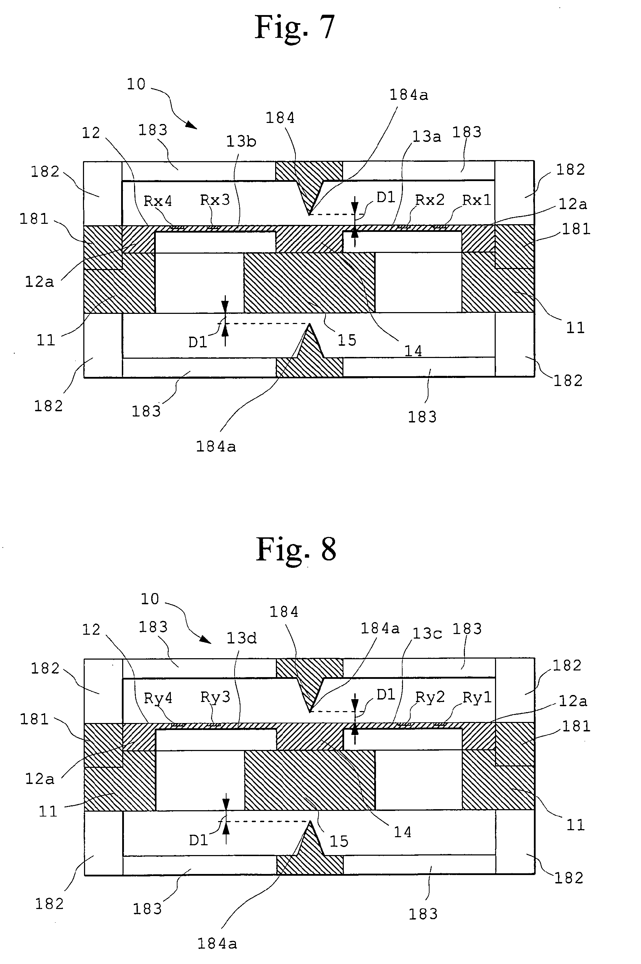

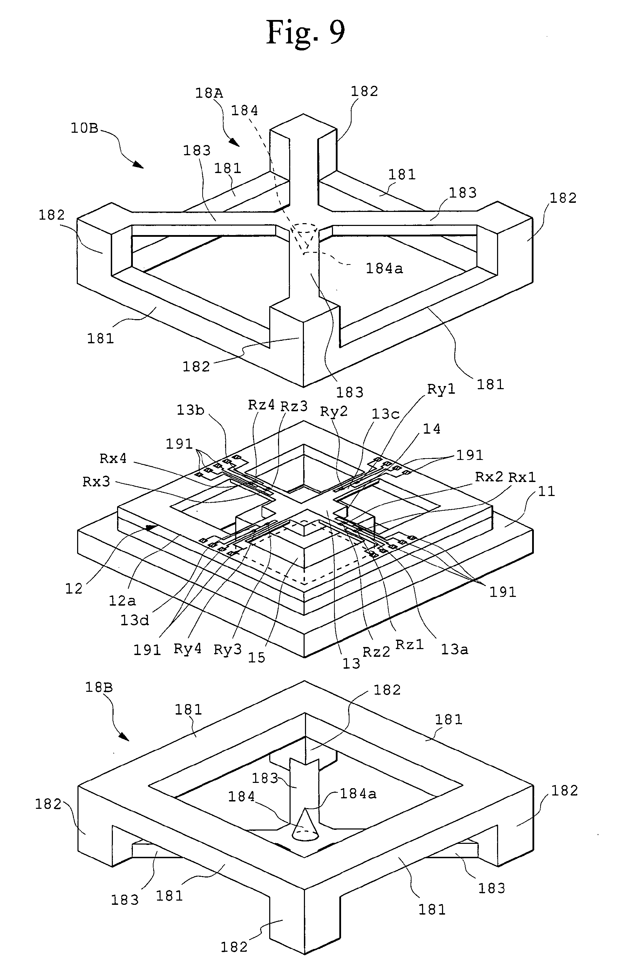

Figure 6 is an external perspective view showing a semiconductor acceleration sensor according to the first embodiment of the present invention, Figure 7 is a cross-sectional view taken on line B-B of Figure 6, Figure 8 is a cross-sectional view taken on line C-C of Figure 6, and Figure 9 is an exploded perspective view.

In these figures, a reference character 10 is a semiconductor acceleration sensor, which has a seating 11, a silicon substrate 12 and supports 19A, 19B.

The seating 11 is in a rectangular frame shape and is fitted with the silicon substrate (silicon wafer) 12 on one opening surface thereof. Moreover, outer frame portions 191 of the supports 19A, 19B are fitted on a outer-peripheral portion of the seating 11.

At an opening in the seating 11, the silicon substrate 12 is fitted and, in the center of a wafer outer-peripheral frame portion 12a, the cross-shaped thin-film diaphragm 13 is formed. Moreover, on top surfaces of respective diaphragm pieces 13a to 13d, piezo resistors (diffusion resistors) Rxl-Rx4, Ryl-Ry4, Rzl-Rz4 are formed.

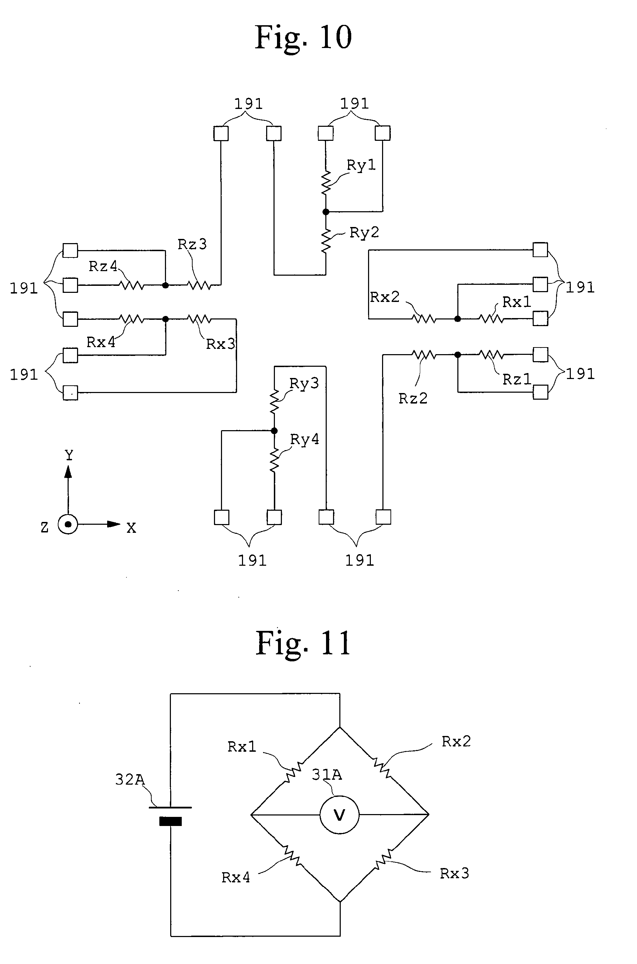

Specifically, the one diaphragm piece 13a of the diaphragm pieces 13a, 13b arranged in line is formed with the piezo resistors Rx1, Rx2, Rz1, Rz2, while the other diaphragm piece 13b is formed with the piezo resistors Rx3, Rx4, Rz3, Rz4. Moreover, the one diaphragm piece 13c of the diaphragm pieces 13c, 13d orthogonal to the diaphragms 13a, 13b and arranged in line is formed with the piezo resistors Ry1, Ry2, while the other diaphragm piece 13d is formed with the piezo resistors Ry3, Ry4. In addition, the piezo resistors Rx1-Rx4, Ry1-Ry4, Rz1-Rz4 are connected as shown in Figure 10 so as to form a resistor bridge circuit for detecting accelerations in X-axis, Y-axis and Z-axis directions orthogonal to each other, and is connected to an electrode 191 for connection provided on an outer-peripheral surface of the silicon substrate 12.

Furthermore, a crossing portion of the diaphragm pieces 13a-13d is formed with a thick-film portion 14 on one face side of the central portion of the diaphragm 13, and a surface of the thick-film portion 14 is attached with a rectangular parallelepiped weight 15 formed out of, for example, glass.

On the other hand, each of the supports 19A, 19B is composed of an outer frame portion 191 in a rectangular frame shape, four columns 192 in an upright position at four corners of a fixed portion, a cross-shaped beam portion 193 provided so as to connect front ends of the respective columns to each other and a conical projection portion 194 provided at a central crossing portion of the beam portion 193.

The outer frame portion 191 is fitted into an outer-peripheral portion of the seating 11 so that the projection portion 194 may be positioned on the other face side of the diaphragm 13, that is, on the side where the weight 15 is absent. The tip 194a of the projection portion 194 is set so as to be positioned at a distance D1 from a surface of the diaphragm 13 or the weight 15. The distance D1 is set to restrict the displacement by the projection portion 194 so that the respective diaphragms 13a-13d may not stretch excessively even if an acceleration occurs in a vertical direction to the face of the diaphragm 13 and a force of a predetermined value or higher is applied to both faces of the diaphragm 13 by the acceleration.

In using the semiconductor acceleration sensor 10 in such a configuration, three resistor bridge circuits are constituted as shown in Figures 11 to 13. That is, for the bridge circuit for detecting an acceleration in A-axis direction, as shown in Figure 11, a connection point between one end of the piezo resistor Rx1 and one end of the piezo resistor Rx2 is connected with a positive pole of a DC power supply 32A, and a connection point between one end of the piezo resistor Rx3 and one end of the piezo resistor Rx4 is connected with a negative pole of the DC power supply 32A. Furthermore, a connection point between the other end of the piezo resistor Rx1 and the other end of the piezo resistor Rx4 is connected with one end of a voltage detector 31A, and a connection point between the other end of the piezo resistor Rx2 and the other end of the piezo resistor Rx3 is connected with the other end of the voltage detector 31A.

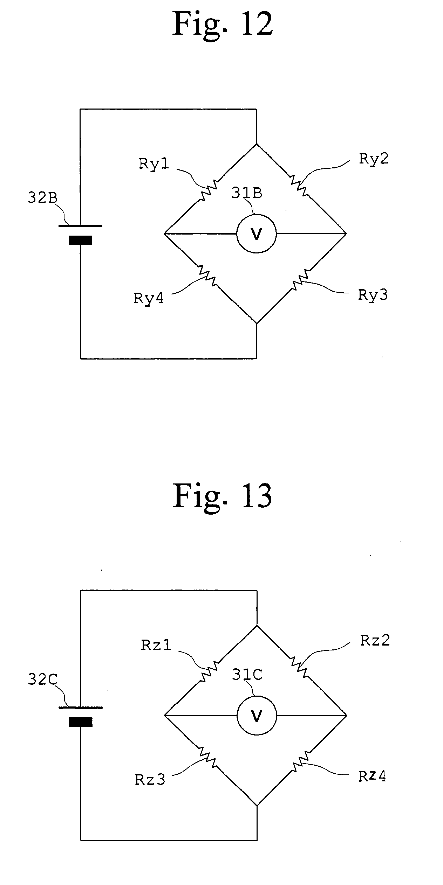

For the bridge circuit for detecting an acceleration in Y-axis direction, as shown in Figure 12, a connection point between one end of the piezo resistor Ry1 and one end of the piezo resistor Ry2 is connected with a positive pole of a DC power supply 32B, and a connection point between one end of the piezo resistor Ry3 and one end of the piezo resistor Ry4 is connected with a negative pole of the DC power supply 32B. Furthermore, a connection point between the other end of the piezo resistor Ry1 and the other end of the piezo resistor Ry4 is connected with one end of a voltage detector 31B, and a connection point between the other end of the piezo resistor Ry2 and the other end of the piezo resistor Ry3 is connected with the other end of the voltage detector 31B.

For the bridge circuit for detecting an acceleration in Z-axis direction, as shown in Figure 13, a connection point between one end of the piezo resistor Rz1 and one end of the piezo resistor Rz2 is connected with a positive pole of a DC power supply 32C, and a connection point between one end of the piezo resistor Rz3 and one end of the piezo resistor Rz4 is connected with a negative pole of the DC power supply 32C. Furthermore, a connection point between the other end of the piezo resistor Rz1 and the other end of the piezo resistor Rz3 is connected with one end of a voltage detector 31C, and a connection point between the other end of the piezo resistor Rz2 and the other end of the piezo resistor Rz4 is connected with the other end of the voltage detector 31C.

According to the semiconductor acceleration sensor 10 in such a configuration, when a force generated with an acceleration applied to the sensor 10 is applied to the weight 15, strain occurs at the respective diaphragm pieces 13a-13d, so that resistance values of the piezo resistors Rx1-Rx4, Ry1-Ry4, Rz1-Rz4 change. Accordingly, the resistor bridge circuits are formed out of the piezo resistors Rx1-Rx4, Ry1-Ry4, Rz1-Rz4 provided for the respective diaphragm pieces 13a-13d, thus detecting accelerations in X-axis, Y-axis and Z-axis directions orthogonal to each other.

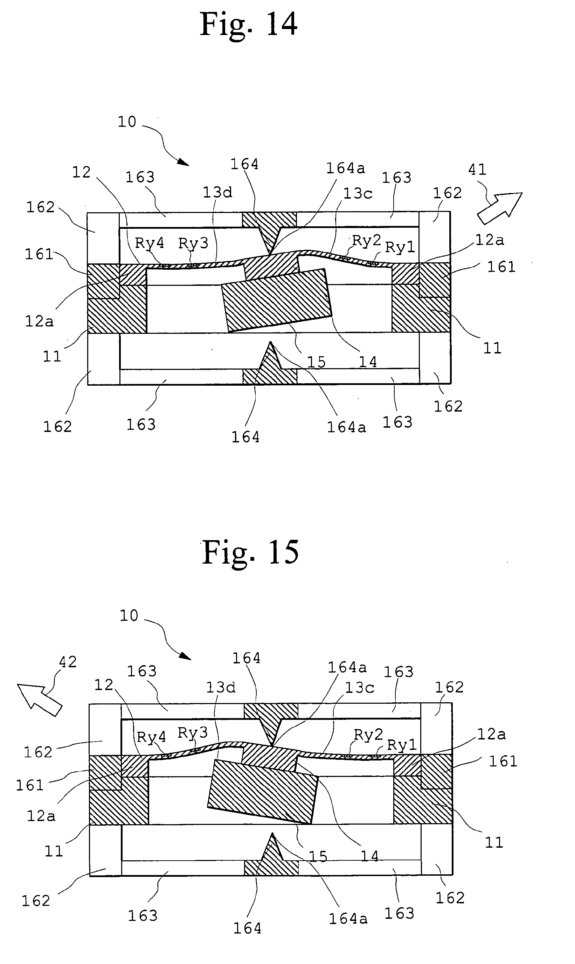

As shown in Figures 14 and 15, when such accelerations that forces 41, 42 including a force component in a vertical direction to a face of the diaphragm 13 work are applied and a force of a predetermined value or higher is applied to the other face of the diaphragm 13, the diaphragm 13 is strained and stretched in such a direction that the forces 41, 42 work, however, the displacement is supported and restricted by a summit 194a of the projection portion 194 to avoid maximum stretch of the respective diaphragm pieces 13a-13d. This permits a position of the weight 15 to be displaced with the summit 194a of the projection portion 194 as a fulcrum even if a force of a predetermined value or higher is applied to the other face of the diaphragm 13, thus detecting accelerations in a parallel direction to a face of the diaphragm 13.

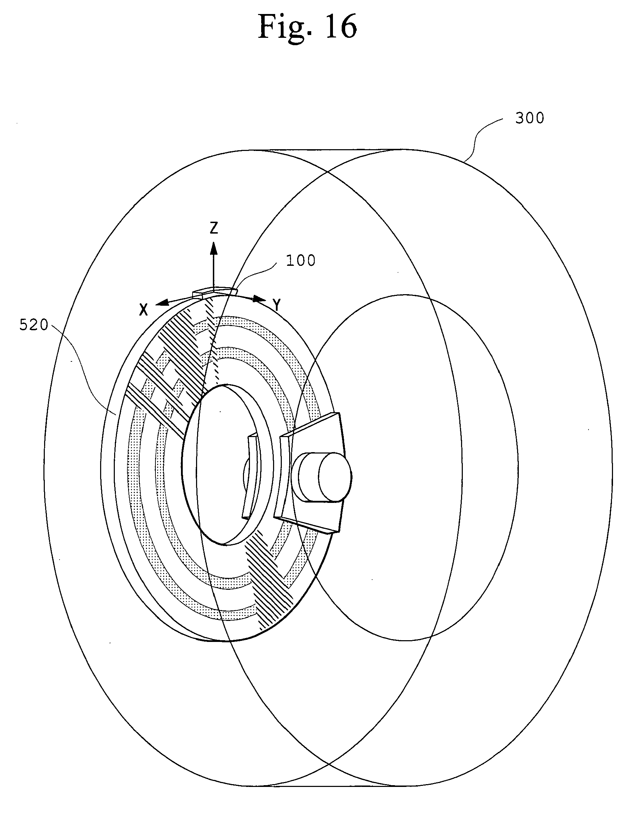

As shown in Figure 16, the semiconductor acceleration sensor 10 can detect accelerations in X-axis, Y-axis and Z-axis directions orthogonal to each other generated by rotation of the tire 300. The sensor unit 100 is provided so that X-axis is adapted to the rotational direction of the tire 300, Y-axis is adapted to rotation-axis direction and Z-axis is adapted to a direction orthogonal to the rotation axis.

On the other hand, the A/D conversion circuit 171 converts an analog electric signal output from the acceleration sensor 10 into a digital signal and outputs the digital signal to the CPU 141. The digital signal corresponds to values of accelerations in the X-axis, Y-axis and Z-axis directions.

As the accelerations generated in the respective X-axis, Y-axis and Z-axis directions, accelerations in positive and negative directions exist. In the present embodiment, accelerations in both positive and negative directions can be detected.

As described later, a rotational speed of each wheel can be determined from an acceleration in X-axis direction. By making the central processing section 140 of the sensor unit 100 calculate the rotational speed of a wheel per unit time, a digital value of the calculated result can be included in the digital information before transmission.

In the present embodiment, use of a frequency in 2.45 GHz band as the first and second frequencies as described above has little effect of the belts 303A, 303B woven with a metallic wire for reinforcing the tire 300, thus make stable communications even if the sensor unit 100 is fixed on the rim 306. To have little effect of metals such as a reinforcing metallic wire in a tire, preferably, a frequency of 1 GHz or higher is used as the first and second frequencies.

Moreover, the sensor unit 100 may be embedded in a tire 300 in producing the tire 300. Needless to say, the sensor unit may be designed using IC chip or similar material to ensure high resistance against heat for vulcanization.

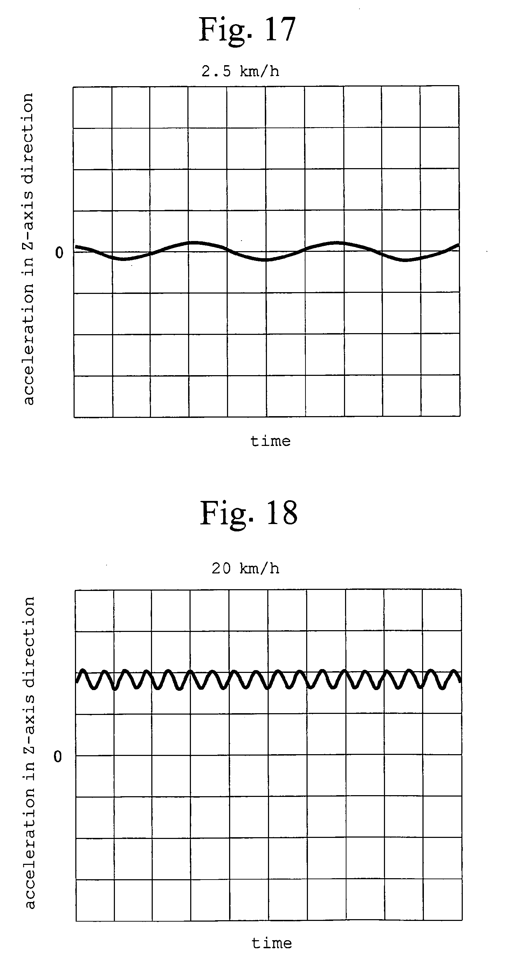

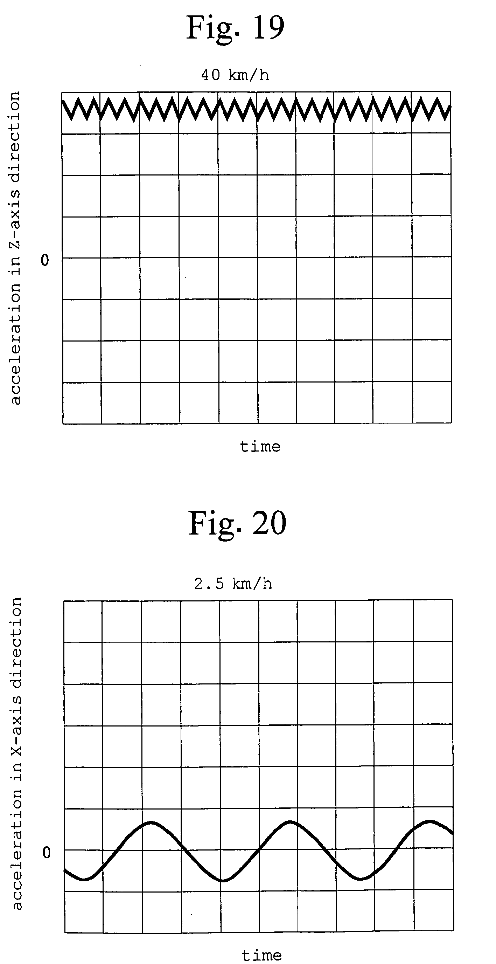

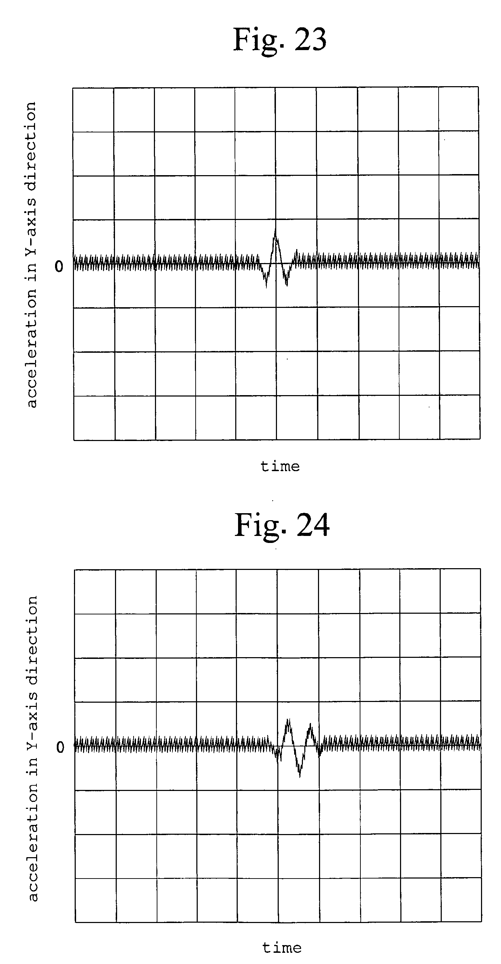

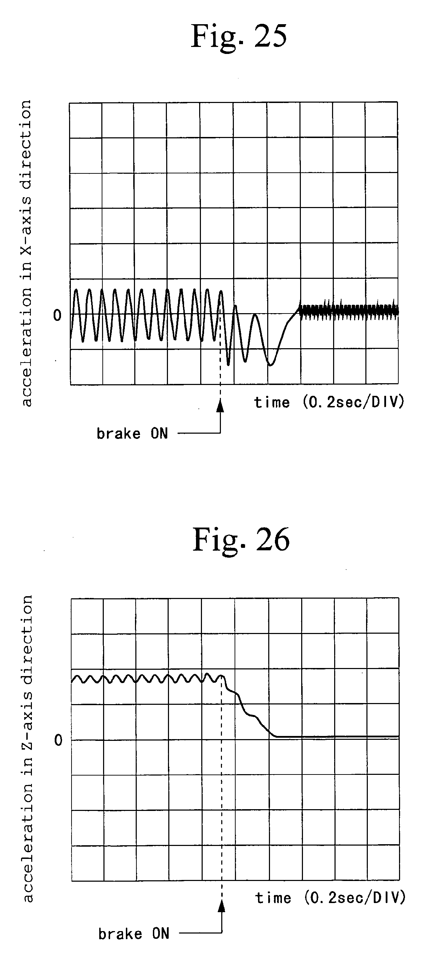

Referring next to Figures 17 to 29, the operation of a system in such a configuration will be described below. Figures 17 to 19 show actually measured results of accelerations in Z-axis direction, Figures 20 to 22 show actually measured results of accelerations in X-axis direction, Figures 23 and 24 show actually measured results of accelerations in Y-axis direction, Figure 25 shows an actually measured result of accelerations in X-axis direction when a brake is applied and Figure 26 shows an actually measured result of accelerations in Z-axis direction when a brake is applied, respectively.

In Figures 17 to 19, Figure 17 shows an actually measured result of accelerations in Z-axis direction during running at 2.5 km/h, Figure 18 shows an actually measured result of accelerations in Z-axis direction during running at 20 km/h, and Figure 19 shows an actually measured result of accelerations in Z-axis direction during running at 40 km/h. As running speed increases, a centrifugal force of a wheel increases in this way, so that an acceleration in Z-axis also increases. Accordingly, a running speed may be determined from an acceleration in Z-axis direction. An actually measured value in a sine wave shape as found in a figure indicates the evidence of having some effect of gravitational acceleration.

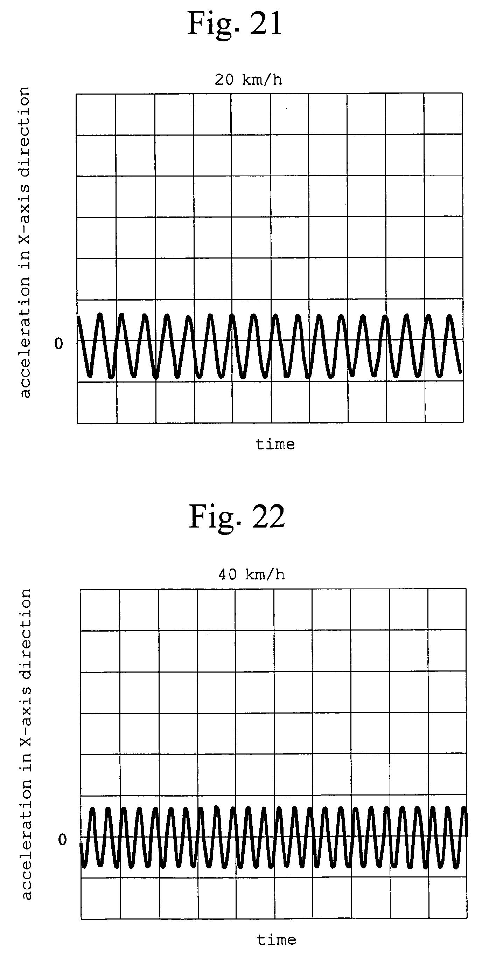

In Figures 20 to 22, Figure 20 shows an actually measured result of accelerations in X-axis direction during running at 2.5 km/h, Figure 21 shows an actually measured result of accelerations in X-axis direction during running at 20 km/h, and Figure 22 shows an actually measured result of accelerations in X-axis direction during running at 40 km/h. As running speed is higher, the rotational speed of a wheel becomes higher in this way, so that a change cycle of an accelerations in X-axis direction becomes shorter. Accordingly, the rotational speed of the wheel can be determined from an acceleration in X-axis direction. An actually measured value in a sine wave shape as found in a figure indicates the evidence of having some effect of gravitational acceleration in the same way as the above.

Figure 23 is a view showing an actually measured result of accelerations in Y-axis direction when a steering wheel is steered to the right during running, and Figure 24 is a view showing an actually measured result of accelerations in Y-axis direction when a steering wheel is steered to the left during running. When a steering wheel is steered to swing a wheel to the right and left, an acceleration in Y-axis direction obviously appears. Needless to say, when a vehicle body slides to the side, an acceleration in Y-axis direction occurs in the same way. At each actually-measured value of the acceleration in Y-axis direction, an acceleration in the reverse direction occurs. This is because a driver unconsciously steers a steering wheel a little in the reverse direction.

As shown in Figures 25 and 26, it was exactly detected that the time from brake application (brake ON: when brake pedal is depressed) to stopping of wheel rotation was approx. 0.2 seconds.

By detecting an acceleration generated when a brake pedal 610 is depressed in this way, a distortion amount of a tire 300, a side-sliding condition of a vehicle body and an idling condition of a tire resulting from this acceleration can be estimated. Based on the above, a pressure control valve can be controlled during vehicle braking.

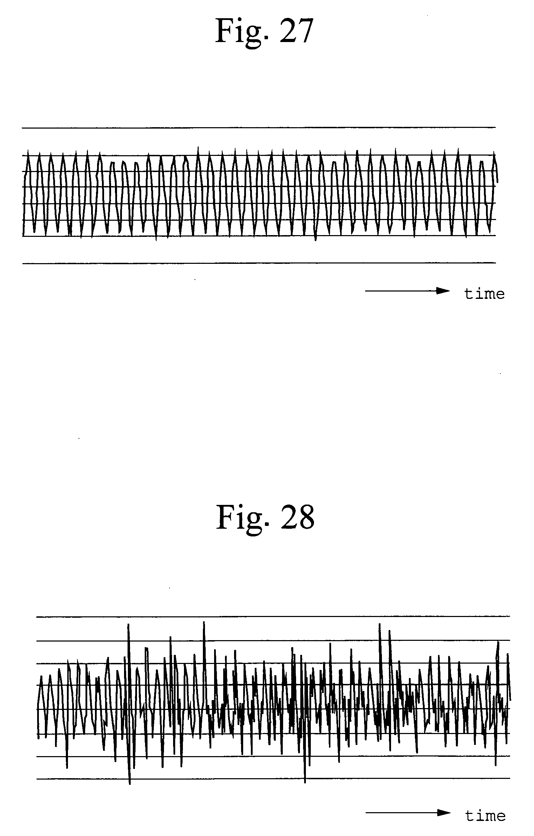

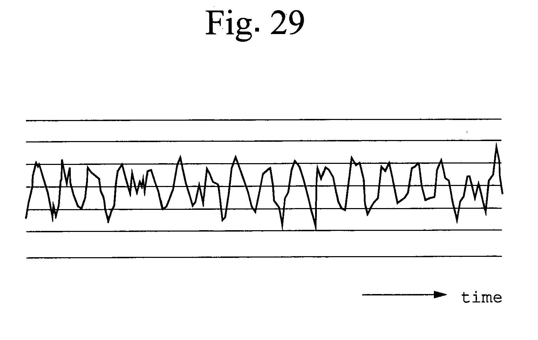

A condition of a signal of an acceleration in X-axis direction (acceleration in wheel-rotation direction) varies with a road surface condition during vehicle running. For example, Figures 27 to 29 record a change in an acceleration signal in X-axis direction (wheel-rotation direction) during running at a vehicle running speed of 60 km/h, respectively. However, Figure 27 is a record of a change in acceleration signals on a dry paved road under a clear weather, Figure 28 is a record of a change in acceleration signals on a paved road with a road surface covered with 2 to 3 mm deep water film under a rainy weather, and Figure 29 is a record of a change in acceleration signals on a paved road with the whole surface is frozen (including a compacted snow road).

As shown in Figure 27, on a dry paved road under a fine weather, the amplitude and cycle of an acceleration signal in X-axis direction are almost constant. As shown in Figure 28, on a paved road with the road surface covered with 2 to 3 mm deep water film under a rainy weather, the water film may cause a tire to slip, thus generating disturbances in the amplitude and cycle of an acceleration signal in X-axis direction. As shown in Figure 29, on a paved road (including compacted snow road) with the whole surface is frozen, a tire always slips, which causes the amplitude of an acceleration signal in X-axis direction to be smaller and the cycle to be larger than a dry paved road under a fine weather.

A condition of an acceleration signal in X-axis direction clearly varies with a road surface condition in this way. In the present embodiment, patterns of variances in acceleration signals in X-axis direction at a plurality of running speeds in various types of road surface conditions are previously measured and the storage section 250 stores the patterns.

Accordingly, the computation portion 240 of the monitor device 200 can identify a road surface condition based on an acceleration signal in a wheel-rotation direction (X-axis direction) received from the sensor unit 100 and road surface condition information stored in the storage section 250 and outputs information of the identified road surface condition. As described above, the present embodiment can promptly and appropriately detect a running road surface condition based on an acceleration signal in X-axis direction.

Next, a second embodiment of the present invention will be described below. The second embodiment describes an active suspension system applied with the above-mentioned road surface information detection system.

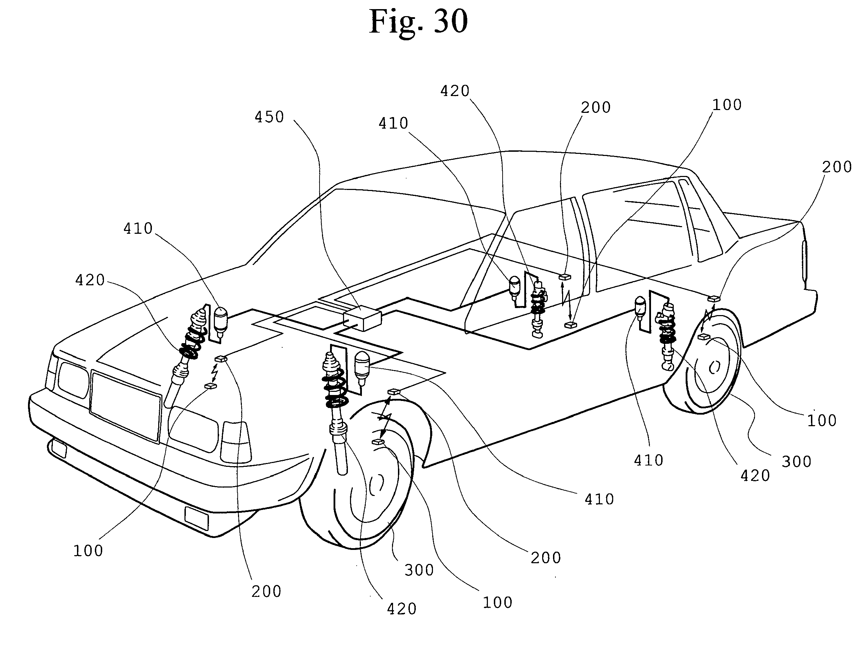

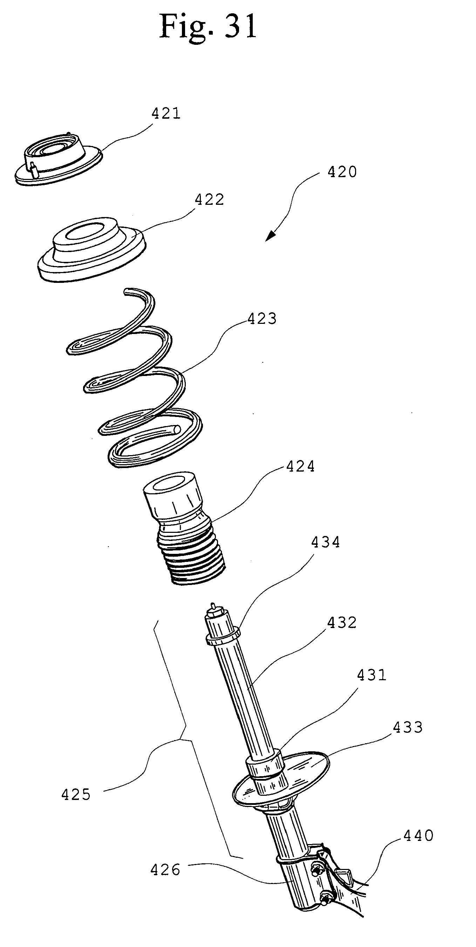

Figure 30 is a schematic configurational view showing an active suspension system according to a second embodiment of the present invention and Figure 31 is a configurational view showing a suspension body according to the second embodiment of the present invention. In figures, the same constituents as the ones of the above-described embodiment have the same characters and descriptions thereof are omitted.

In these figures, reference character 100 denotes a sensor unit, reference character 200 denotes a monitor device, reference character 300 is a tire, reference character 410 is a suspension drive source, reference character 420 is a suspension body and reference character 450 is a suspension drive control unit.

The monitor device 200, fixed on each tire house in the same way as the above, is connected with a suspension drive control unit 450 through a cable, operates on electric energy transmitted from the suspension drive control unit 450 and transmits information of detected road surface conditions to the suspension drive control unit 450.

The suspension drive control unit 450, mainly constituted of a known CPU, fetches information of road surface conditions output from each monitor device 200 and controls driving of the suspension drive source 410 based thereon.

The suspension drive source 410, mainly constituted of a known hydraulic pump, controls an oil pressure in a damper of the suspension body 420 based on an electric signal from the suspension drive control unit 450.

The suspension body 420, as shown in Figure 31, is composed of an upper mount portion 421 for absorbing a change in an angle of the damper 425 relative to a vehicle body, a spring upper seat 422, a coil spring 423, a rubber member 424, a hydraulic damper 425 and a damper connection member 426.

The top face of the suspension body 420 is coupled to a vehicle body (not shown) and a spring upper seat 422 is fitted on the bottom face of the upper mount portion 421. Between the spring upper seat 422 and an annular receiving pan typed guide 433 provided at a columnar damper 425, the coil spring 423 is fitted.

Under this condition, a piston rod 432 of the damper 425 is positioned around the central axis of the coil spring 423, and an annular bracket provided at the tip of the piston rod 432 so as to project in a radial direction abuts against the bottom face of the upper mount portion 421. A roughly cylindrical rubber member 424 is positioned between the piston rod 432 and the coil spring 423.

The piston rod 432 of the damper 425 is inserted into an outer cylinder 431 from the top end and the length of the piston rod inserted into the outer cylinder 431 varies with a pressure of oil charged in the outer cylinder 431 and a force applied from the outside, so that a length of the damper 425 itself varies.

A lower end of the damper 425 is fixed on the damper connection member 426 and the damper connection member 426 is connected to a hub carrier 440 and, as shown in Figure 3, an axle is supported by a hub carrier 440 as shown in Figure 3. Moreover, the hub carrier 440 is connected to the vehicle body (not shown) through a lower arm.

The suspension drive control unit 450 stores hydraulic characteristics information indicating a relationship between information of the accelerations, acceleration signals and road surface conditions in X-axis, Y-axis and Z-axis obtained from the monitor device 200 and oil pressure in the damper 425. The hydraulic characteristics information is previously determined by actual measurement by experiments or the like. The suspension drive control unit 450 estimates a vertical variation of each tire 300 based on detected results of accelerations, acceleration signals and road surface conditions and hydraulic characteristics information, controls operation of the suspension drive source 410 based on the estimated vertical variation of the tire and then controls a pressure of oil charged into the damper 425 from the suspension drive source 410. This permits the suspension drive control unit 450 to perform active suspension control.

The active suspension system in such a configuration, equipped with the sensor unit 100, incorporates information of running road surface conditions based on respective acceleration signals in X-axis direction (wheel-rotation direction) for each rotation mechanism section 500 output from the monitor device 200 into the suspension drive control unit 450 for active suspension control, thus performing more highly precise control than in a conventional way.

For example, even if a frictional force between a tire and a road surface varies because of a difference in the type of a tire mounted on a vehicle, highly precise control can be performed. Even in the case of a vehicle to be drivingly controlled individually for each tire such as 4WD vehicle, highly precise control is attainable.

The active suspension system may be applied to the suspension for vehicular seat as a conventional example.

Next, a third embodiment of the present invention will be described below.

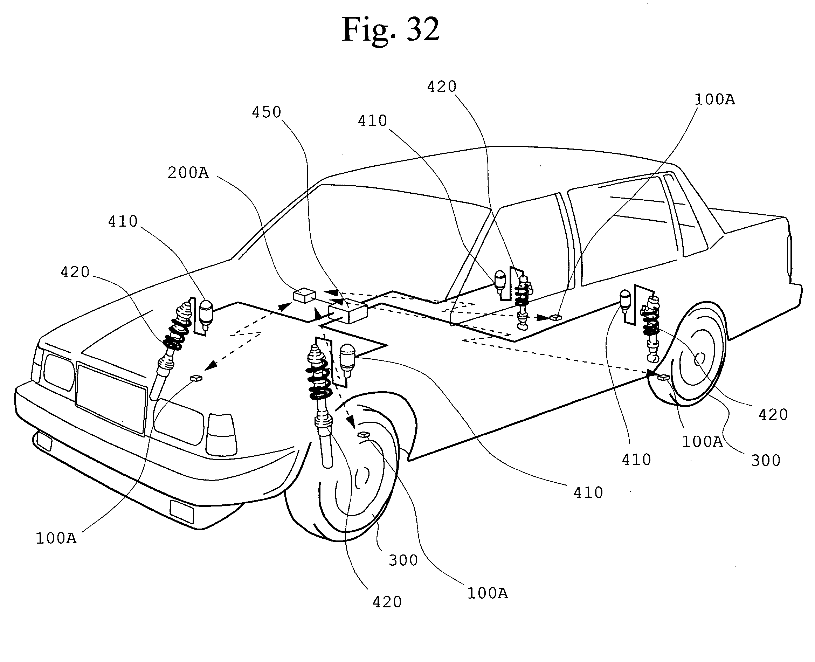

Figure 32 is a schematic configurational view showing an active suspension system according to a third embodiment of the present invention. In figures, the same constituents as the ones of the above-described embodiment have the same characters and descriptions thereof are omitted. A difference between the third embodiment and the second embodiment is that the third embodiment uses a monitor device 200A and a sensor unit 100A provided for each rotation mechanism section 500.

The sensor unit 100A has an equivalent configuration to the sensor unit 100 in the above embodiment. A difference from the sensor unit 100 in the above embodiment is that a program of the CPU 141 is set so that respective accelerations may be detected when an information request instruction including identification information of its own from the monitor 200A is received and the detected result may be transmitted as digital information along with the identification information of its own.

The monitor device 200A has an equivalent configuration to the monitor device 200 in the above embodiment and differences from the monitor device 200 in the above embodiment are that there is provided an operation portion (not shown) which permits the control portion 230 to previously store identification information of the sensor unit 100A provided for each tire 300, a program of the control portion 230 is set so as to transmit an information request instruction including identification information of the sensor unit 100A to the sensor units 100A of all the tires 300 provided on a vehicle in a predetermined sequence or at random during driving, and that detection position information indicating a detected result corresponding to which of the rotation mechanism sections in the vehicle is output along with the detected result when the detected result is output to the suspension drive control unit 450.

Such a configuration permits one monitor device 200A to obtain detected results from all the sensor units 100A.

Next, a fourth embodiment of the present invention will be described below. The fourth embodiment describes an anti-lock brake system applied with the above-mentioned road surface information detection system.

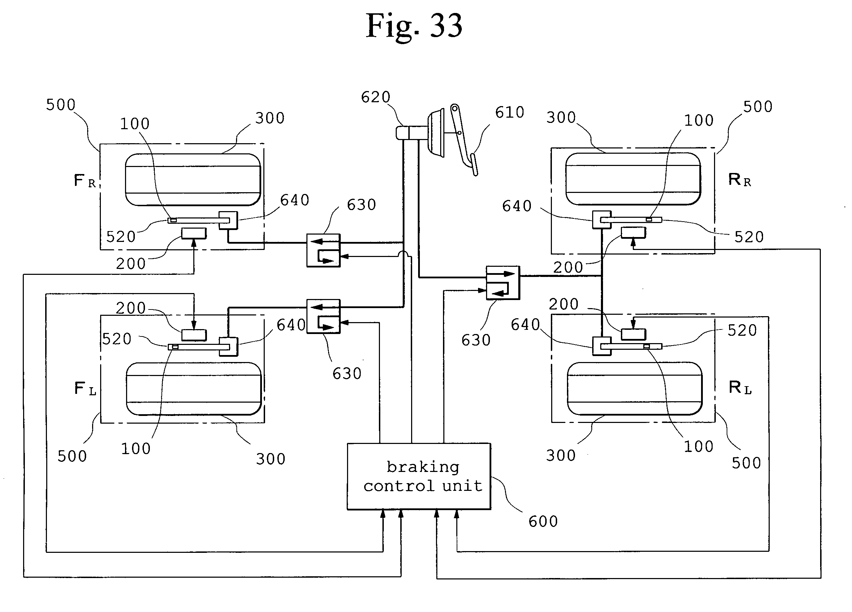

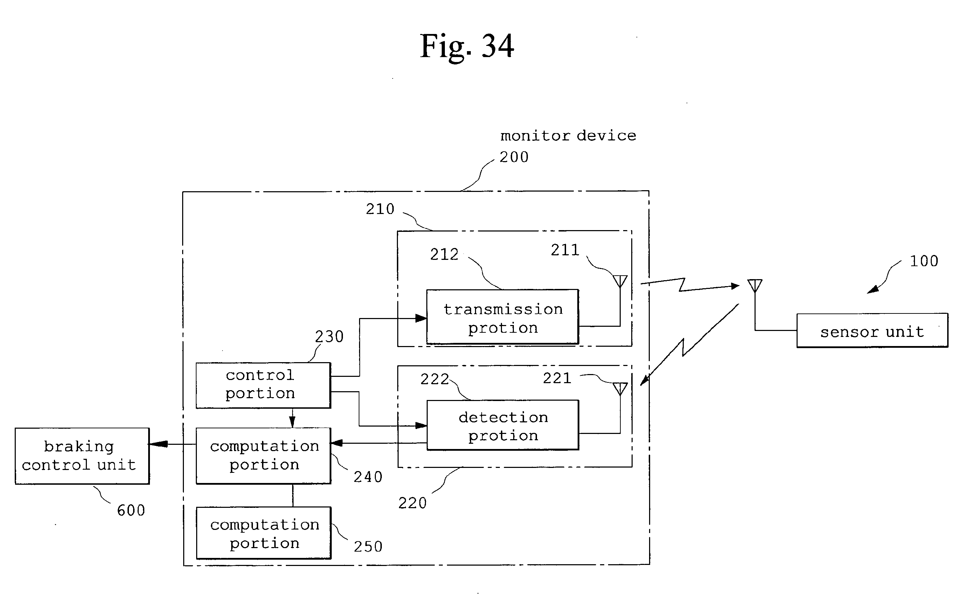

Figure 33 is a schematic configurational view showing an anti-lock brake system according to a fourth embodiment of the present invention and Figure 34 is a configurational view showing an electric circuit of a monitor device according to the fourth embodiment of the present invention. In figures, the same constituents as the ones of the above-described embodiment have the same characters and descriptions thereof are omitted.

In these figures, reference character 100 denotes a sensor unit, reference character 200 denotes a monitor device, reference character 300 denotes a tire, reference character 500 denotes a rotation mechanism section, reference character 600 denotes a braking control unit, reference character 610 denotes a brake pedal, reference character 620 denotes a master cylinder for brake, reference character 630 denotes a pressure control valve for controlling pressure oil for brake and reference character 640 denotes a brake drive actuator.

The monitor device 200, fixed on each tire house 3 in the same way as the above, is connected with a braking control unit 600 through a cable as shown in Figure 33, operates on electric energy transmitted from the braking control unit 600 and transmits information of detected road surface conditions to the braking control unit 600.

The braking control unit 600, mainly constituted of a known CPU, fetches detected results output from the sensors 510, 520, for detecting rotational speeds of each tire 300, fetches information of road surface conditions output from each monitor device 200, and controls the pressure control valve 630 based on the information.

That is, the braking control unit 600 stores distortion characteristics information indicating a relationship between information of the accelerations, acceleration signals and road surface conditions in X-axis, Y-axis and Z-axis obtained from the monitor device 200 and a distortion amount of tire 300. The distortion characteristics information are previously determined by actual measurement by experiments or the like. Furthermore, the braking control unit 600 estimates a distortion amount of each tire 300 based on detected results of accelerations, acceleration signals and road surface conditions and distortion characteristics information, controls the pressure control valve 630 based on the estimated distortion of the tire and the detected result of rotational speeds of the each tire 300 and drives a brake drive actuator 640. This permits the braking control unit 600 to perform braking control.

In other words, depressing the brake pedal 610 raises oil pressure in the master cylinder 620, and the oil pressure is transmitted to the brake drive actuator 640 through a pressure control valve, so that a braking force is applied to rotation of the each tire 300.

The braking control unit 600 performs automatic control so that the tire 300 locks to generate no slip by electrically controlling an operating state of the each pressure control valve 630. The braking control unit 600 electrically controls the operating state of the each pressure control valve 630 based on road surface information output from the monitor device 200.

According to the anti-lock brake system in such a configuration, for example, a conventional general anti-lock brake system fetches the detected result output from a sensor for detecting a rotational speed of the tire 300 mounted on a vehicle and controls the pressure control valve 630, while the present embodiment, equipped with the sensor unit 100, fetches, into the braking control unit 600, information of running road surface conditions based on respective acceleration signals in X-axis direction (wheel-rotation direction) for each rotation mechanism section 500 output from the monitor device 200 for braking control, thus performing more highly precise control than ever before.

For example, even if a frictional force between a tire and a road surface varies because of a difference in the type of a tire mounted on a vehicle, highly precise control can be performed. Even in the case of a vehicle to be drivingly controlled individually for each tire such as 4WD vehicle, highly precise control is attainable.

As described above, the present embodiment is configured so that the sensor unit 100 receives an electromagnetic wave radiated from the monitor device 200 and transmits the detected result when electric energy is obtained, by which the above-described effect can be achieved without need of addition of the detection portion 150. Such a configuration that the sensor unit 100 is attached with the detection portion 150 can avoid erroneous transmission of a detected result from the sensor unit 100 caused by unnecessary noise from the outside by setting a program or the like so that the detected result may be transmitted when identification information of its own is received from the monitor device 200, thus preventing unnecessary radiation of an electromagnetic wave.

The above-described embodiment is configured so that the sensor unit 100 is fixed on the brake disc 520, but is not limited to this. If the sensor unit is to be fixed on a rotator rotating in the rotation mechanism section 500, it may be fixed on a rotating shaft (axle), rotor or the like.

Transmission of digital information between the sensor unit 100 and the monitor device 200 may be performed by electromagnetic induction coupling with coil, or by a wired system using a brush fitted in a motor or the like.

Next, a fifth embodiment of the present invention will be described below.

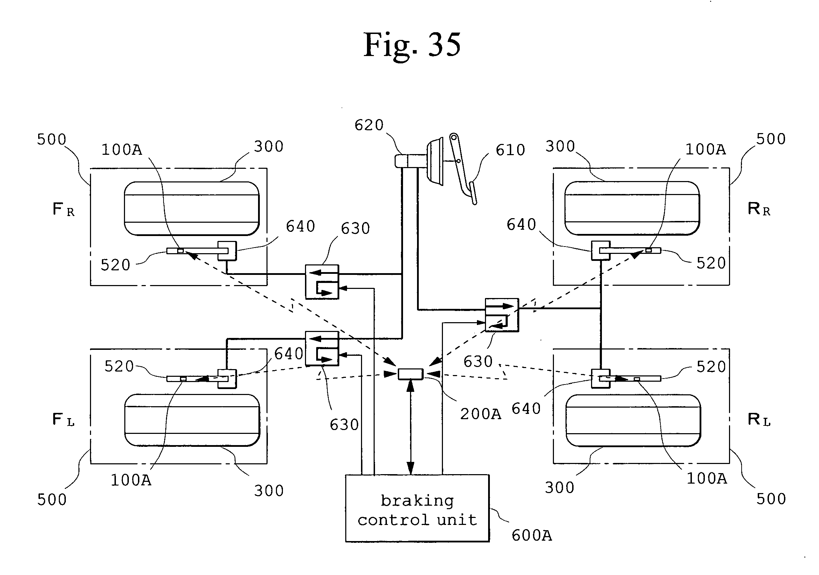

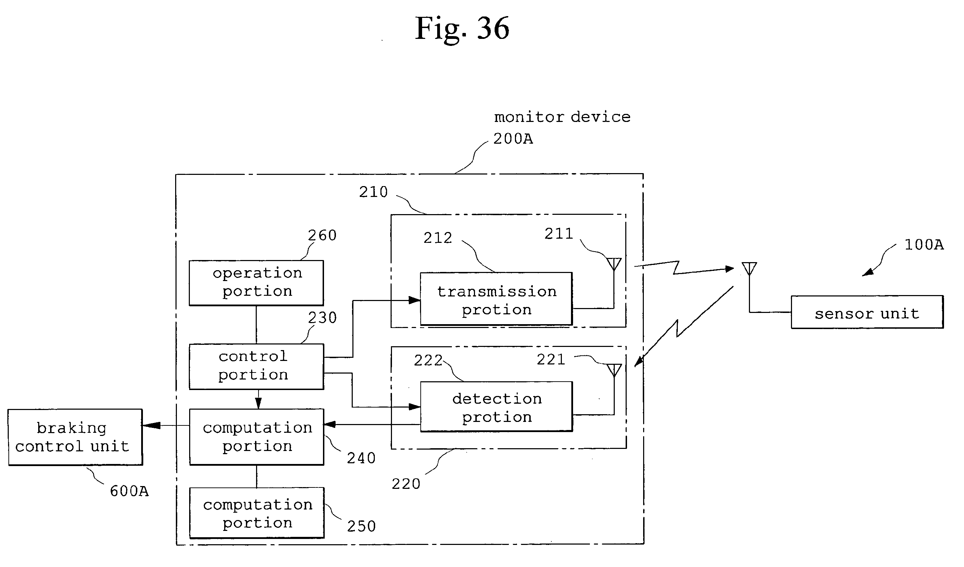

Figure 35 is a schematic configurational view showing an anti-lock brake system according to a fifth embodiment of the present invention and Figure 36 is a configurational view showing an electric circuit of a monitor device according to the fifth embodiment of the present invention. In figures, the same constituents as the ones of the above-described embodiment have the same characters and descriptions thereof are omitted. A difference between the fifth embodiment and the fourth embodiment is that the fifth embodiment uses a monitor device 200A and a sensor unit 100A provided for each rotation mechanism section 500.

The sensor unit 100A has an equivalent configuration to the sensor unit 100 in the above embodiment. A difference from the sensor unit 100 in the above embodiment is that a program of the CPU 141 is set so that respective accelerations may be detected when an information request instruction including identification information of its own from the monitor 200A is received and the detected result may be transmitted as digital information along with the identification information of its own.

The monitor device 200A has an equivalent configuration to the monitor device 200 in the above embodiment and differences from the monitor device 200 in the above embodiment are that there is provided an operation portion 260 which permits the control portion 230 to previously store identification information of the sensor unit 100A provided for each tire 300, a program of the control portion 230 is set so as to transmit an information request instruction including identification information of the sensor unit 100A to the sensor units 100A of all the tires 300 provided on a vehicle in a predetermined sequence or at random during driving, and that detection position information indicating a detected result corresponding to which of the rotation mechanism sections 500 in the vehicle is output along with the detected result when the detected result is output to the braking control unit 600A.

Such a configuration permits one monitor device 200A to obtain detected results from all the sensor units 100A.

Such a system that the configurations in the respective present embodiments are combined or a part of the configurations are interchanged may be formed.

The above-described embodiment takes 2.45 GHz as both of the first and the second frequencies, but is not limited to this. As described above, frequency of 1 GHz or higher will significantly suppress effects of metal in a tire on reflection or cutoff of electromagnetic waves and enable highly precise acquirement of detected data by the sensor unit 100 and further the first and the second frequencies may be different from each other. Preferably, the first and the second frequencies are set as needed in designing.

In the present embodiment, the anti-brake system for four-wheeled vehicle is described above as an example. Needless to say, however, the present embodiment provides the similar advantages to even vehicles except four-wheeled vehicles, for example, two-wheeled vehicles or vehicles having six or more wheels.

### Industrial applicability

The variance cycle of electric signals of detected accelerations in wheel-rotation direction during vehicle running becomes shorter as rotational speed is higher, and the magnitude and cycle of variance vary with road surface conditions, which enables rapid detection of road surface conditions from the acceleration signal.

## Claims

1. A road surface condition detection system comprising:
a sensor unit which is provided at a rotation mechanism portion installed on a vehicle body of a vehicle and including a rotor for rotating the wheels fixed thereon and the wheels and which detects an acceleration generated in a rotational direction with rotation, converts the acceleration into an electric signal, converts the detected acceleration signal into a digital data and transmits digital information including the digital data;
a monitor device which is installed on the vehicle body and receives the digital information transmitted from the sensor unit and acquires the acceleration signal, **characterized in that**
the monitor device includes:
road surface condition storage means of a plurality of types of information of variation characteristics of the acceleration signal detected for each condition of road surfaces on which the vehicle runs;
road surface condition identification means of identifying a road surface condition corresponding to the received acceleration signal based on information of variation characteristics of an acceleration signal received from the sensor unit and an acceleration signal stored in the road surface condition storage means; and
road surface condition information output means of extracting, from the road surface condition storage means, information of a road surface condition identified by the road surface condition identification means and of outputting the information.

2. The road surface condition detection system according to claim 1, **characterized in that** the road surface condition storage means stores variation characteristics patterns of the acceleration signals as information of variation characteristics of the acceleration signals.

3. The road surface condition detection system according to claim 1, **characterized in that** the road surface condition storage means stores information obtained by applying predetermined processing for variation characteristics of the acceleration signals as information of variation characteristics of the acceleration signals.

4. The road surface condition detection system according to claim 1, **characterized in that** the sensor unit is mounted on the rotor.

5. The road surface condition detection system according to claim 1, **characterized in**
**that** the sensor unit comprises:
receiving means of receiving an electromagnetic wave of a first frequency;
conversion means of converting energy of the received electromagnetic wave of the first frequency into driving electric energy; and
transmission means of operating on the electric energy and transmitting the digital information with an electromagnetic wave of a second frequency, and that
the monitor device includes:
radiation means of radiating the electromagnetic wave of the first frequency;
receiving means of receiving the electromagnetic wave of the second frequency; and
extraction means of extracting the digital information from the electromagnetic wave of the second frequency.

6. The road surface condition detection system according to claim 5, **characterized in that** the first frequency and the second frequency are the same.

7. The road surface condition detection system according to claim 1, **characterized in that**
the sensor unit comprises storage means of storing identification information of its own and transmission means of including the identification information in the digital information before transmission and that
the monitor device comprises identification means of identifying the rotation mechanism section through the identification information.

8. The road surface condition detection system according to claim 1, **characterized in that** the sensor unit comprises a semiconductor acceleration sensor having a silicon piezo diaphragm to detect an acceleration in the rotational direction.

9. An active suspension system for vehicle configured so as to drive a suspension actuator in accordance with detected results of vertical movement of a wheel and to reduce vertical movement of a vehicle body for generation of braking force, **characterized in that**
the active suspension system comprises:
a sensor unit which is provided at a rotation mechanism portion installed on a vehicle body of a vehicle and including a rotor for rotating the wheels fixed thereon and the wheels and which detects an acceleration generated in a rotational direction with rotation, converts the acceleration into an electric signal, converts the detected acceleration signal into a digital data and transmits digital information including the digital data;
a monitor device which receives digital information transmitted from the sensor unit, obtains the acceleration signal and outputs road surface condition information indicating a running road surface based on the acceleration signal; and
drive means of driving the suspension actuator based on road surface information output from the monitor device, and that
the monitor device includes:
road surface condition storage means of a plurality of types of information of variation characteristics of the acceleration signal detected for each condition of road surfaces on which the vehicle runs;
road surface condition identification means of identifying a road surface condition corresponding to the received acceleration signal based on information of variation characteristics of an acceleration signal received from the sensor unit and an acceleration signal stored in the road surface condition storage means; and
road surface condition information output means of extracting, from the road surface condition storage means, information of a road surface condition identified by the road surface condition identification means and of outputting the information.

10. The active suspension system according to claim 9, **characterized in that** the road surface condition storage means stores variation characteristics patterns of the acceleration signals as information of variation characteristics of the acceleration signals.

11. The active suspension system according to claim 9, **characterized in that** the road surface condition storage means stores information obtained by applying predetermined processing for variation characteristics of the acceleration signals as information of variation characteristics of the acceleration signals.

12. The active suspension system according to claim 9, **characterized in that** the sensor unit is mounted on the rotor.

13. The active suspension system according to claim 9, **characterized in that**
the sensor unit comprises:
receiving means of receiving an electromagnetic wave of a first frequency;
conversion means of converting energy of the received electromagnetic wave of the first frequency into driving electric energy; and
transmission means of operating on the electric energy and transmitting the digital information with an electromagnetic wave of a second frequency, and that
the monitor device includes:
radiation means of radiating the electromagnetic wave of the first frequency;
receiving means of receiving the electromagnetic wave of the second frequency; and
extraction means of extracting the digital information from the electromagnetic wave of the second frequency.

14. The active suspension system according to claim 13, **characterized in that** the first frequency and the second frequency are the same.

15. The active suspension system according to claim 9, **characterized in that**
the sensor unit comprises storage means of storing identification information of its own and transmission means of including the identification information in the digital information before transmission, and that
the monitor device comprises identification means of identifying the rotation mechanism section through the identification information.

16. The active suspension system according to claim 9, **characterized in that** the sensor unit comprises a semiconductor acceleration sensor having a silicon piezo diaphragm to detect an acceleration in the rotational direction.

17. An anti-lock brake system for vehicle configured so as to drive a brake drive actuator in accordance with a detected result of an operating state of a vehicular brake and to generate a target braking force, **characterized in that**
the anti-lock brake system comprises:
a sensor unit which is provided at a rotation mechanism portion installed on a vehicle body and including a rotor for rotating the wheels fixed thereon and the wheels and which detects an acceleration generated in a rotational direction with rotation, converts the acceleration into an electric signal, converts the detected acceleration signal into a digital data and transmits digital information including the digital data;
a monitor device which receives digital information transmitted from the sensor unit, obtains the acceleration signal and outputs road surface condition information indicating a running road surface based on the acceleration signal; and
drive means of driving the brake drive actuator based on road surface information output from the monitor device, and that
the monitor device includes:
road surface condition storage means of a plurality of types of information of variation characteristics of the acceleration signal detected for each condition of road surfaces on which the vehicle runs;
road surface condition identification means of identifying a road surface condition corresponding to the received acceleration signal based on information of variation characteristics of an acceleration signal received from the sensor unit and an acceleration signal stored in the road surface condition storage means; and
road surface condition information output means of extracting, from the road surface condition storage means, information of a road surface condition identified by the road surface condition identification means and of outputting the information.

18. The anti-lock brake system according to claim 17, **characterized in that** the road surface condition storage means stores variation characteristics patterns of the acceleration signals as information of variation characteristics of the acceleration signals.

19. The anti-lock brake system according to claim 17, **characterized in that** the road surface condition storage means stores information obtained by applying predetermined processing for variation characteristics of the acceleration signals as information of variation characteristics of the acceleration signals.

20. The anti-lock brake system according to claim 17, **characterized in that** the sensor unit is mounted on the rotor.

21. The anti-lock brake system according to claim 17, **characterized in that**
the sensor unit comprises:
receiving means of receiving an electromagnetic wave of a first frequency;
conversion means of converting energy of the received electromagnetic wave of the first frequency into driving electric energy; and
transmission means of operating on the electric energy and transmitting the digital information with an electromagnetic wave of a second frequency, and that
the monitor device includes:
radiation means of radiating the electromagnetic wave of the first frequency;
receiving means of receiving the electromagnetic wave of the second frequency; and
extraction means of extracting the digital information from the electromagnetic wave of the second frequency.

22. The anti-lock brake system according to claim 21, **characterized in that** the first frequency and the second frequency are the same.

23. The anti-lock brake system according to claim 17, **characterized in that**
the sensor unit comprises storage means of storing identification information of its own and transmission means of including the identification information in the digital information before transmission, and that
the monitor device comprises identification means of identifying the rotation mechanism section through the identification information.

24. The anti-lock brake system according to claim 17, **characterized in that** the sensor unit comprises a semiconductor acceleration sensor having a silicon piezo diaphragm to detect an acceleration in the rotational direction.

25. A sensor unit which is provided at a rotation mechanism portion installed on a vehicle body and including a rotor for rotating the wheels fixed thereon and the wheels and which detects an acceleration generated with rotation, **characterized by** comprising:
detection/conversion means of detecting an acceleration generated in the rotational direction with rotation and converting the detected acceleration into an electric signal;
conversion means of converting the acceleration signal into digital data; and
transmission means of transmitting digital information including the digital data.

26. The sensor unit according to claim 25, **characterized by** comprising:
receiving means of receiving an electromagnetic wave of a first frequency;
conversion means of converting energy of the received electromagnetic wave of the first frequency into driving electric energy; and
transmission means of operating on the electric energy and transmitting the digital information with an electromagnetic wave of a second frequency.

27. The sensor unit according to claim 26, **characterized in that** the first frequency and the second frequency are the same.

28. The sensor unit according to claim 25, **characterized by** comprising:
storage means of storing identification information of its own; and
transmission means of including the identification information in the digital information before transmission.

29. The sensor unit according to claim 25, **characterized by** comprising a semiconductor acceleration sensor having a silicon piezo diaphragm to detect an acceleration in the rotational direction.
